# EUROPÄISCHE PATENTSCHRIFT

(11) **EP 3 475 245 B1**
(45) Veröffentlichungstag und Bekanntmachung des Hinweises auf die Patenterteilung: **13.04.2022**
(21) Anmeldenummer: 17739887.2
(22) Anmeldetag: 22.06.2017
(51) Int. Cl.: C04B 35/111, B28B 1/40, B28B 19/00, B32B 18/00, C04B 35/119, C04B 35/14, C04B 35/185, C04B 35/44, C04B 35/486, C04B 35/488, C04B 35/505, C04B 35/52, C04B 35/565, C04B 35/632, C04B 35/634, C04B 35/80

(54) **PREPREGS UND VERFAHREN ZU DEREN HERSTELLUNG**
PREPREGS AND METHOD FOR PRODUCING SAME
PRÉIMPRÉGNÉS ET LEUR PROCÉDÉ DE PRÉPARATION

(30) Priorität: 22.06.2016 DE 102016007652; 13.06.2017 WO PCT/EP2017/064401
(43) Veröffentlichungstag der Anmeldung: 01.05.2019
(73) Patentinhaber: Universität Bayreuth, 95447 Bayreuth (DE)
(72) Erfinder: KNOHL, Stefan, 01159 Dresden (DE); KRENKEL, Walter, 95445 Bayreuth (DE); PUCHAS, Georg, 95447 Bayreuth (DE); WAMSER, Thomas, 97956 Werbach (DE)
(74) Vertreter: Vossius & Partner Patentanwälte Rechtsanwälte mbB
(86) Internationale Anmeldenummer: PCT/EP2017/065408
(87) Internationale Veröffentlichungsnummer: WO 2017/220727

(56) Entgegenhaltungen:
- EP-A1- 2 380 862
- WO-A1-2016/016388
- US-A- 4 983 422
- US-A1- 2002 197 465
- US-A1- 2014 200 130

## Beschreibung

Die vorliegende Erfindung betrifft die Material- und Prozessentwicklung von Werkstoffen, insbesondere von keramischen faserverstärkten Verbundwerkstoffen. Bereit gestellt werden in diesem Zusammenhang ein Prepreg für einen keramischen Verbundwerkstoff, ein Verfahren zur Herstellung eines Grünkörpers mit Hilfe des Prepregs, sowie ein Verfahren zur Herstellung des keramischen Verbundwerkstoffs aus dem erfindungsgemäß hergestellten Grünkörper.

Monolithische Keramiken brechen im Allgemeinen spröde. Bei keramischen faserverstärkten Verbundwerkstoffen ("Composites") erzielt man durch den Verbund von Fasern und der umgebenden Matrix ein zähes bzw. quasiduktiles Bruchverhalten (z.B. EP1645410 A2 oder DE102010055221 A1). Die keramischen Verbundwerkstoffe bestehen aus keramischen Fasern (z.B. C, SiC, Al₂O₃, Mullit) und einer keramischen Matrix (z.B. C, SiC, Al₂O₃, Mullit).

Als Faserverstärkung kommen in der Regel hochtemperaturbeständige Endlosfaserbündel zum Einsatz, die aus bis zu 50.000 Einzelfilamenten bestehen. Das Bruchverhalten des Composites wird gezielt durch die Anpassung der Faser-Matrix-Bindung eingestellt. Wichtig ist, dass ein Riss nicht durch die Matrix in die Faser eingeleitet wird, sondern dass es zu energiedissipierenden Effekten, wie Rissverzweigung, Rissumlenkung oder Faser-Pull-Out, kommt. Ein weit verbreitetes Konzept sieht eine Faserbeschichtung zur Einstellung der Faser-Matrix-Bindung vor. Ein anderer Ansatz ist die Einbettung der Fasern in eine poröse schwache Matrix. Durch die hohe Porosität der Matrix und die somit reduzierte Steifigkeit der Matrix kommt es zu den beschriebenen energiedissipierenden Effekten, die zu einem quasiduktilen Bruchverhalten führen.

Die Matrix wird üblicherweise durch die Imprägnierung der Faserrovings oder der Faserarchitektur mit Schlickern, Precursoren, Polymeren oder Metallschmelzen synthetisiert. Durch eine Temperaturbehandlung bei über 1000 °C bildet sich die Matrix aus. Die Matrix muss eine ausreichende Festigkeit aufweisen, dass es zu einer Kraftübertragung zwischen den Faserfilamenten kommt. EP1734023 A1 und EP1734024 A1 offenbaren Schlicker zur Herstellung von keramischen faserverstärkten Verbundmaterialien, die speziell behandelte oder ausgewählte oxidkeramische Pulver enthalten, und die frei von organischen Bindemitteln sein können.

Herausforderungen bei der Herstellung keramischer Verbundwerkstoffe sind die Einstellung eines gleichmäßigen, hohen Faservolumengehalts (möglichst über 25 Vol.%), und der Aufbau einer homogenen (wenn auch porösen) Matrix, welche die Fasern umgibt. Der hohe Faservolumengehalt und die homogene Matrix sind vorteilhaft um gewünschte Eigenschaften, wie eine Biegefestigkeit von über 50 MPa und ein quasi-duktiles Bruchverhalten, zu realisieren.

Bei der Synthese der keramischen Matrix muss beachtet werden, dass diese während der Sinterung nur gering schwinden soll und dass eine vollständige Imprägnierung der Faserbündel zum Erreichen des gewünschten quasiduktilen Bruchverhaltens notwendig ist. Bei der konventionellen Herstellung der keramischen Verbundwerkstoffe, ausgehend von wässrigen Schlickern, versucht man folglich durch einen hohen Feststoffgehalt des Schlickers bei der Imprägnierung der Fasern eine hohe Gründichte und somit eine niedrige Sinterschwindung zu realisieren. Jedoch ist die Viskosität eines Schlickers mit einem hohen Feststoffgehalt ebenfalls hoch, was eine vollständige Imprägnierung der Faserbündel oder daraus hergestellter Halbzeuge (z.B. Gewebe) sehr schwierig macht.

Eine Möglichkeit zum Einstellen einer hohen Gründichte ist die Imprägnierung von Faserarchitekturen mit niedrig-viskosen Schlickern mit geringem Feststoffgehalt, gefolgt von einem partiellen Entzug des Wassers durch ein Vortrocknen. Das Vortrocknen kann durch eine Auslagerung in einem Trockenschrank erfolgen, bis der gewünschte Wasseranteil entzogen ist.

Als vorteilhafter Ansatz hat sich die in WO 2016/016388 A1 beschriebene Zugabe von Glycerin zum Schlicker erwiesen. Nach dem Imprägnieren einer Faserarchitektur mit einem solchen Schlicker kann, beispielsweise durch die Konditionierung in einem Klimaschrank bei definierter Temperatur und Feuchte, ein definierter Wassergehalt im Schlicker eingestellt werden, der die Fasern umgibt. Das hergestellte Prepreg enthält typischerweise ein Fasergewebe oder eine andere flächige Faserarchitektur (z.B. Matte, Vlies, Gelege) und den Schlicker, der zum Aufbau der Matrix während eines späteren Sinterschritts dienen kann. Der konditionierte Schlicker weist vorteilhafterweise eine hohe Viskosität auf, und kann darüber hinaus dazu verwendet werden, der imprägnierten Faserarchitektur Klebrigkeit zu verleihen. Die schlickerimprägnierte Faserarchitektur kann daher über eine für die Formgebung vorteilhafte hohe Klebrigkeit sowie Drapierbarkeit verfügen. Hierdurch wird es möglich, die Prepregs auf oder in eine Form (konvex oder konkav) abzulegen ohne dass ein Formengegenstück, wie etwa bei der Warmpresstechnik, benötigt wird. Bei der Formgebung, wie z.B. beim Laminieren kann ein hoher Faservolumengehalt (z.B. > 30 Vol.%) realisiert werden, um hohe mechanische Kennwerte zu erreichen. Dennoch können sich die Fasern bzw. Faserbündel im Prepreg umordnen, und eventuell überschüssiges Matrixmaterial kann während der Formgebung herausgedrückt werden. Der notwendige Anpressdruck ist sehr gering, so dass eine Faserschädigung ausgeschlossen werden kann. Als Ergebnis der Formgebung können selbsttragende, z.B. komplexe großvolumige Strukturen bereitgestellt werden, welche durch eine anschließende Temperaturbehandlung ohne ein Erweichen durch ein Sintern verfestigt werden können. Das Ablegen der einzelnen Prepreglagen mit gleichmäßigem Faservolumengehalt und homogener Matrix ist reproduzierbar. Trotz der Klebrigkeit können einzelne Lagen wieder entfernt werden und in anderen Faserorientierungen positioniert werden.

Die Eigenschaften des Schlickers, der die Fasern im Prepreg umgibt, und insbesondere dessen Trocknungsverhalten, aber auch die Befeuchtung werden durch eine Glycerinzugabe wesentlich beeinflusst. Beim Sinterprozess wird das verbliebene Glycerin rückstandsfrei ausgebrannt. Es kann als Porenbildner dienen, der die Schadenstoleranz des Verbundwerkstoffs erhöht.

Die Zugabemenge von Glycerin wird von zwei Aspekten bestimmt: Zum einen ist dies die Einstellung des Feuchtegehalts im Prepreg bei vorgegebener Atmosphäre und Temperatur. Zum anderen soll der Grünkörper nach dem Trocknen des/der Prepregs selbsttragend sein und nicht wieder durch Aufnahme von Wasser aus der Umgebungsluft bedingt durch hygroskopische Eigenschaften des Glycerins im Grünkörper destabilisiert werden. Daher wurde bei Einsatz von Glycerin zur Herstellung von Prepregs die zugegebene Menge so eingestellt, dass nach dem Entfernen von Wasser ein stabiler Grünköper erhalten wurde. Ein Nachteil solcher Prepregs ist, dass sie bei ihrer Verarbeitung unter typischen Fertigungsbedingungen, wie z.B. einer Luftfeuchtigkeit von ca. 30 bis 60% relativer Feuchte, abtrocknen. Um die vorteilhaften Eigenschaften der Prepregs, wie ihre Klebrigkeit und Drapierbarkeit optimal nutzen zu können, muss die Verarbeitung daher schnell erfolgen, eine Zwischenlagerung müsste unter kontrollierten Bedingungen und insbesondere einer erhöhten Luftfeuchtigkeit erfolgen. Zudem ist die automatisierte Herstellung der Pregpregs auf einer Prepreganlage problematisch. In einer Prepreganlage werden die Faserarchitekturen kontinuierlich infiltriert und anschließend getrocknet oder konditioniert. Bei Bandgeschwindigkeiten von ca. 1 m/min und einer (klimatisierten) Trocknungszone von 5 m stehen ca. 5 min zur Verfügung, um nach dem Imprägnieren der Faserarchitektur durch Entfernen von Wasser, z.B. durch Konditionierung bei kontrollierter Temperatur und Luftfeuchtigkeit, einen hohen Feststoffanteil im Schlicker einzustellen. Für die bisher bekannten Glycerin-enthaltenden Schlicker werden typischerweise Einstellzeiten/Konditionierungszeiten von deutlich mehr als einer Stunde verwendet, um einen kontrollierten Rückgang des Wassergehalts im Schlicker zu gewährleisten. Sinkt der Wassergehalt des Schlickers im Prepreg bei einem schnellen Wasserentzug zu stark, so kann das Prepreg seine Hydroplastizität verlieren, was zu einer verminderten Prepregqualität führt. Als Hydroplastizität wird dabei die Fähigkeit des Prepregmaterials bezeichnet, durch Wiederaufnahme von Wasser in den Schlicker von einem Zustand mit geringerem Wassergehalt, in dem das Prepreg elastische Eigenschaften aufweist, in einen Zustand mit höherem Wassergehalt überzugehen, in dem das Material plastisches Verhalten zeigt bzw. plastisch verformbar ist.

US 4983422 und US 2002/01974 A1 offenbaren Komposite auf Basis von Alminiumoxid, die gebildet werden durch Einbringen eines flüssigen Aluminiumoxid-Vorläufermaterials in ein Verstärkungsgewebe, gefolgt vom Härten des Vorläufermaterials und vom Umwandeln des gehärteten Vorläufermaterials in eine Aluminiumoxidkeramik durch Pyrolyse. US 2014/0200130 A1 betrifft ein Verfahren zur Herstellung einer Kompositstruktur mit Keramikmatrix (CMC), bei dem ein Komposit-Prepreg mit Hilfe einer speziellen Vorrichtung auf der Oberfläche eines Werkzeugs platziert und anschließend gehärtet und in eine CMC-Struktur überführt wird. EP 2380862 A1 offenbart ein Verfahren zum Erzeugen eines CMC-Werkstücks mit Hilfe eines Schlickers aus Wasser, Polyvinylalkohol, Salpetersäure, Polyethylenglycol und Aluminiumoxid-Partikeln und einem Gewebe, das keramische Fasern umfasst.

Vor diesem Hintergrund stellt die vorliegende Erfindung ein Verfahren zur Herstellung eines Grünkörpers für einen keramischen Verbundwerkstoff bereit, das die folgenden Schritte beinhaltet:
a) Imprägnieren einer Anordnung keramischer Fasern mit einem Schlicker, der die folgenden Bestandteile umfasst:
   (i) 10 bis 40 Vol.%, bezogen auf das Gesamtvolumen des Schlickers, keramische Partikel,
   (ii) ein alkoholisches organisches Lösungsmittel, ausgewählt aus:
      (ii-1) 21 bis 35 Gew.%, bezogen auf das Gesamtgewicht der keramischen Partikel im Schlicker, Glycerin,
      (ii-2) 21 bis 35 Gew.%, bezogen auf das Gesamtgewicht der keramischen Partikel im Schlicker, eines Oligo- oder Polyethylenglycols mit einem mittleren Molekulargewicht von maximal 800 g/mol,
      (ii-3) 21 bis 35 Gew.%, bezogen auf das Gesamtgewicht der keramischen Partikel im Schlicker, mindestens eines C2-C6-Alkandiols, und
      (ii-4) 21 bis 35 Gew.%, bezogen auf das Gesamtgewicht der keramischen Partikel im Schlicker, eines Gemischs aus zwei oder mehr Komponenten, ausgewählt aus einem C2-C6-Alkandiol, einem Oligo- oder Polyethylenglycol mit einem mittleren Molekulargewicht von maximal 800 g/mol, und Glycerin; und
   (iii) Wasser;
b) Reduzieren des Wassergehalts des Schlickers in der imprägnierten Faseranordnung, um ein Prepreg für einen keramischen Verbundwerkstoff zu erhalten;
c) Bereitstellen eines geformten Verbundmaterials aus einem oder mehreren der gemäß Schritt b) erhaltenen Prepregs;
d) Konsolidieren des geformten Verbundmaterials durch Reduzieren des Wassergehalts und des Gehalts an alkoholischem organischen Lösungsmittel, so dass ein Grünkörper erhalten wird.

Auch ein Verfahren zur Herstellung des keramischen Verbundwerkstoffs durch Sintern des so erhaltenen Grünkörpers ist Gegenstand der Erfindung.

Darüber hinaus stellt die Erfindung ein Prepreg für einen keramischen Verbundwerkstoff bereit, das eine Anordnung keramischer Fasern umfasst, die mit einem Schlicker imprägniert ist, wobei der Schlicker die folgenden Bestandteile umfasst:
(i) keramische Partikel,
(ii) ein alkoholisches organisches Lösungsmittel, ausgewählt aus:
   (ii-1) 21 bis 35 Gew.%, bezogen auf das Gesamtgewicht der keramischen Partikel im Schlicker, Glycerin,
   (ii-2) 21 bis 35 Gew.%, bezogen auf das Gesamtgewicht der keramischen Partikel im Schlicker, eines Oligo- oder Polyethylenglycols mit einem mittleren Molekulargewicht von maximal 800 g/mol,
   (ii-3) 21 bis 35 Gew.%, bezogen auf das Gesamtgewicht der keramischen Partikel im Schlicker, mindestens eines C2-C6-Alkandiols, und
   (ii-4) 21 bis 35 Gew.%, bezogen auf das Gesamtgewicht der keramischen Partikel im Schlicker, eines Gemischs aus zwei oder mehr Komponenten, ausgewählt aus einem C2-C6-Alkandiol, einem Oligo- oder Polyethylenglycol mit einem mittleren Molekulargewicht von maximal 800 g/mol, und Glycerin; und
(iii) Wasser.

Im Rahmen der vorliegenden Erfindung wurde festgestellt, dass bestimmte alkoholische organische Lösungsmittel alternativ zu bzw. in Ergänzung zu Glycerin in Schlickern für keramische Verbundwerkstoffe eingesetzt werden können, um Prepregs mit einer vorteilhaften Verarbeitbarkeit, insbesondere einer vorteilhaften Klebrigkeit und Drapierbarkeit zu erhalten, und um Grünkörper mit einer hohen Gründichte bereit zu stellen. Durch Konditionieren des in der Faserarchitektur enthaltenen Schlickers können diese Eigenschaften in Form eines Prepreg reproduzierbar und dauerhaft, z.B. auch nach einem vollständigem Trocknen und der Lagerung der Prepregs, bereitgestellt werden.

Durch Einsatz eines Schlickers mit den bevorzugten hohen Gehalten an alkoholischem Lösungsmittel werden auf vorteilhafte Weise Prepregs erhalten, die über einen längeren Zeitraum in einer Umgebung mit niedriger Luftfeuchtigkeit gelagert und/oder weiterverarbeitet werden können, ohne ihre hydroplastischen Eigenschaften zu verlieren. Darüber hinaus kann bei der Bereitstellung der Prepregs der Wassergehalt des im Prepreg enthaltenen Schlickers schneller reduziert werden, d.h. es können höhere Temperaturen und/oder geringere Luftfeuchtigkeiten (z.B. 100 °C, 10 % rel. Luftfeuchtigkeit) eingesetzt werden, ohne dass die Gefahr eines irreversiblen Verlusts der Hydroplastizität besteht. So kann die benötigte Zeit zur Herstellung des Prepregs deutlich verringert werden (z.B. auf unter eine Stunde). Auch die maschinelle Herstellung der Prepregs wird so ermöglicht. Darüber hinaus erlaubt das erfindungsgemäße Verfahren, das einen Konsolidierungsschritt bei der Herstellung eines Grünkörpers umfasst, den Gehalt an alkoholischem Lösungsmittel über weite Bereiche zu variieren, ohne dass dadurch die gewünschten Eigenschaften des erhaltenen Grünkörpers durch hygroskopische Eigenschaften des alkoholischen Lösungsmittels beeinträchtigt werden. So können im Rahmen einer bevorzugten Ausführungsform der Erfindung insbesondere Schlicker mit vergleichsweise hohen Gehalten an alkoholischen Lösungsmitteln, bevorzugt mit einem hohen Gehalt an Glycerin, zum Einsatz kommen. Um gemäß dieser bevorzugten Ausführungsform einen formstabilen, typischerweise selbsttragenden Grünkörper bereit zu stellen, der nicht durch Aufnahme von Wasser bedingt durch hygroskopische Eigenschaften des darin enthaltenen alkoholischen Lösungsmittels destabilisiert wird, wird im Rahmen des erfindungsgemäßen Verfahrens zur Herstellung eines Grünkörpers zunächst aus dem/den Prepreg(s) mit einem hohen Gehalt an alkoholischem Lösungsmittel ein geformtes Verbundmaterial gebildet. In einem darauffolgenden Konsolidierungsschritt werden der Wassergehalt und der Gehalt an alkoholischem Lösungsmittel des im Verbundmaterial enthaltenen Schlickers reduziert, um den Grünkörper zu bilden. Damit ist keine Rückbefeuchtung des erhaltenen Grünkörpers bei Lagerung unter normalen Umgebungsbedingungen, wie z.B. einer Raumtemperatur von 20 °C und einer Luftfeuchtigkeit von < 60 % relativer Feuchte mehr möglich, was ansonsten zu einer Destabilisierung oder einem Erweichen des Grünkörpers führen würde. Trotz des Konsolidierungsschritts bleibt aufgrund der Möglichkeit einer schnellen Reduzierung des Wassergehalts bei der Herstellung der Prepregs ein erheblicher Zeitgewinn, so dass mit Hilfe des erfindungsgemäßen Verfahrens innerhalb kurzer Zeit ein Grünkörper für einen keramischen Verbundwerkstoff bzw. der keramische Verbundwerkstoff selbst hergestellt werden können. Eine Fertigungsdauer von 36 h oder weniger für den Verbundwerkstoff wird damit realisierbar.

Wie vorstehend erläutert betrifft ein Aspekt der Erfindung ein Verfahren zur Herstellung eines Grünkörpers für einen keramischen Verbundwerkstoff, das Schritte a) bis d) beinhaltet:
a) Imprägnieren einer Anordnung keramischer Fasern mit einem Schlicker, der die folgenden Bestandteile umfasst:
   (i) 10 bis 40 Vol.%, bezogen auf das Gesamtvolumen des Schlickers, keramische Partikel,
   (ii) ein alkoholisches organisches Lösungsmittel, ausgewählt aus:
      (ii-1) 21 bis 35 Gew.%, bezogen auf das Gesamtgewicht der keramischen Partikel im Schlicker, Glycerin,
      (ii-2) 21 bis 35 Gew.%, bezogen auf das Gesamtgewicht der keramischen Partikel im Schlicker, eines Oligo- oder Polyethylenglycols mit einem mittleren Molekulargewicht von maximal 800 g/mol,
      (ii-3) 21 bis 35 Gew.%, bezogen auf das Gesamtgewicht der keramischen Partikel im Schlicker, mindestens eines C2-C6-Alkandiols, und
      (ii-4) 21 bis 35 Gew.%, bezogen auf das Gesamtgewicht der keramischen Partikel im Schlicker, eines Gemischs aus zwei oder mehr Komponenten, ausgewählt aus einem C2-C6-Alkandiol, einem Oligo- oder Polyethylenglycol mit einem mittleren Molekulargewicht von maximal 800 g/mol, und Glycerin; und
   (iii) Wasser;
b) Reduzieren des Wassergehalts des Schlickers in der imprägnierten Faseranordnung, um ein Prepreg für einen keramischen Verbundwerkstoff zu erhalten;
c) Bereitstellen eines geformten Verbundmaterials aus einem oder mehreren der gemäß Schritt b) erhaltenen Prepregs; und
d) Konsolidieren des geformten Verbundmaterials durch Reduzieren des Wassergehalts und des Gehalts an alkoholischem organischen Lösungsmittel, so dass ein Grünkörper erhalten wird.

Die in Schritt a) unter Punkt (ii) genannten Lösungsmittel sind typischerweise bei Raumtemperatur, z.B. 20 °C, flüssig. Bevorzugt weisen sie hygroskopische Eigenschaften auf.

In Schritt b) wird der Wassergehalt des Schlickers in der imprägnierten Faseranordnung reduziert. Der Gehalt des alkoholischen organischen Lösungsmittels wird dabei typischerweise nicht oder nur in geringem Umfang reduziert.

In Schritt b) des Verfahrens wird dabei das erfindungsgemäße Prepreg als Zwischenprodukt erhalten. Daher wird für den fachkundigen Leser klar sein, dass die folgenden Erläuterungen zu den Schritten a) bis b) des erfindungsgemäßen Verfahrens in gleicher Weise für das erfindungsgemäße Prepreg und für seine Herstellung gelten, soweit nicht im Einzelfall andere Angaben gemacht werden.

Die Anordnung keramischer Fasern in Schritt a) des erfindungsgemäßen Verfahrens (auch als "Faseranordnung" bezeichnet) und im erfindungsgemäßen Prepreg wird von keramischen Fasern gebildet. Die keramischen Fasern umfassen bevorzugt Rovings, d.h. Faserbündel keramischer Filamente, und stärker bevorzugt besteht die Anordnung keramischer Fasern aus solchen Rovings. Beispielsweise können die keramischen Fasern 100 oder mehr solcher Filamente in einem Roving kombinieren. Bevorzugt enthalten sie 300 oder mehr, und stärker bevorzugt 400 oder mehr der Filamente. Die Maximalzahl der Filamente pro Bündel ist nicht speziell eingeschränkt soweit die Bündel bequem hergestellt und gehandhabt werden können. Beispielsweise können Faserbündel mit einer Maximalzahl an Filamenten von 50.000, bevorzugt von maximal 20.000 verwendet werden, stärker bevorzugt von maximal 10.000, noch stärker bevorzugt von maximal 5.000 und besonders bevorzugt von maximal 1.000. Die Filamente weisen typischerweise einen Durchmesser im µm-Bereich auf, z.B. im Bereich von 3 bis 15 µm, bevorzugt im Bereich von 7 bis 13 µm. Gemäß dem Verständnis des Fachmanns bezieht sich der Begriff des Bündels in diesem Zusammenhang auf eine Kombination von Filamenten, die nebeneinander mit gleicher Orientierung ihrer Längsachsen vorliegen. Im Allgemeinen sind die Filamente innerhalb eines Bündels nicht mit Nachbarfilamenten verschlungen. Die Bündel können als solche verdreht sein.

Die keramischen Fasern können z.B. aus Endlosfasern, Schnittfasern oder Kombinationen davon ausgewählt werden. Schnittfasern besitzen beispielsweise eine Länge von weniger als 100 mm, bevorzugt weniger als 30 mm. Sie sind bevorzugt nicht kürzer als 20 mm. Besonders bevorzugt als Anordnung keramischer Fasern sind Anordnungen keramischer Endlosfasern.

Bei der Anordnung der keramischen Fasern handelt es sich bevorzugt um ein Flächengebilde, beispielsweise ein flächiges Gewebe oder Gelege. Solche Flächengebilde können eine regelmäßige Form, z.B. eine rechteckige oder quadratische Form aufweisen, sie können in Form eines Bandes bereitgestellt werden oder können eine unregelmäßige Form aufweisen, die an die jeweilige Anwendung angepasst ist. Sie können auch in eine vorgegebene Form gebracht sein, beispielsweise als Wickelkörper. Beim Wickeln wird der Roving zunächst imprägniert und anschließend auf einen Kern abgelegt. Eine ähnliche Vorgehensweise ist bei Flechtprozessen denkbar. Die Dicke eines Flächengebildes aus keramischen Fasern im Rahmen der Erfindung liegt beispielsweise im Bereich von 0,25 mm bis 10 mm, bevorzugt von 0,25 mm bis 3 mm. Ebenfalls bevorzugte Anordnungen von keramischen Fasern sind Geflechte oder Gelege in dreidimensionaler Form. Insbesondere sind als Anordnung keramischer Fasern flächige Gewebe oder Gelege aus Endlosfasern in Form von Rovings bevorzugt.

Die keramischen Fasern zum Einsatz im Rahmen der vorliegenden Erfindung sowie daraus gebildete Anordnungen z.B. in Form von Flächengebilden sind als Fasern und Halbzeuge kommerziell ohne weiteres erhältlich.

Die keramischen Fasern, die die in Schritt a) des erfindungsgemäßen Verfahrens imprägnierte Anordnung bilden, sind in der Regel auch im bereitgestellten Prepreg und im Grünkörper enthalten. Wie für den Fachmann erkennbar, bleibt die Anordnung der Fasern typischerweise im bereitgestellten Prepreg und im Grünkörper im Wesentlichen erhalten, wobei jedoch durch die Imprägnierung mit dem Schlicker Fasern bzw. Filamente verschoben werden können. Beispielsweise kann es zum Aufquellen von Rovings oder zur Vereinzelung von darin enthaltenen Filamenten kommen.

Hinsichtlich der Keramikmaterialien, die für die keramischen Fasern geeignet sind, ist die vorliegende Erfindung nicht speziell eingeschränkt. Beispielsweise können die keramischen Fasern Al₂O₃, SiO₂, ZrO₂, Y₂O₃, Y₂O₃-stabilisiertes ZrO₂, Yttrium-Aluminium-Granat, Mullit, Si₃N₄, SiC, SiCN, SiBNC oder Kohlenstoff, oder Kombinationen von zwei oder mehr dieser Materialien enthalten. Bei solchen Kombinationen kann es sich um Keramik-Blends oder Komposite aus unterschiedlichen Materialien innerhalb einer Faserstruktur handeln, oder um Faseranordnungen, die Fasern aus unterschiedlichen Materialien enthalten. Als ein Beispiel für eine Faser aus einer Kombination von Keramikmaterialien kann eine Kombination aus Al₂O₃ und Mullit genannt werden, wie sie in Fasern verwendet wird, die unter der Marke Nextel^{®} kommerziell erhältlich sind.

In den keramischen Fasern, die aus den vorstehenden Keramikmaterialien gebildet sind, ist der Gehalt dieser Materialien bevorzugt 90 Gew.% oder höher, stärker bevorzugt 95 Gew.% oder höher, bezogen auf das Gesamtgewicht der keramischen Fasern als 100 Gew.%, oder die keramischen Fasern bestehen aus diesen Keramikmaterialien.

Keramische Fasern und daraus hergestellte Halbzeuge können eine Schlichte enthalten, die während ihrer Herstellung aufgebracht wurde. Im Rahmen der vorliegenden Erfindung kann es nützlich sein die gegebenenfalls vorhandene Schlichte vor dem Imprägnieren der Anordnung keramischer Fasern z.B. durch eine Wärmebehandlung zu entfernen.

Der in Schritt a) des erfindungsgemäßen Verfahrens eingesetzte Schlicker, und damit auch die erfindungsgemäßen Prepregs, beinhalten keramische Partikel. Diese Partikel umfassen ein Keramikmaterial, und bestehen bevorzugt aus einem solchen Material. Das Keramikmaterial ist nicht speziell eingeschränkt, aber es wird für den Fachmann verständlich sein, dass es sich um Partikel eines Keramikmaterials handeln sollte, die nach einem Sinterschritt eine Keramikmatrix in einem keramischen Verbundwerkstoff bilden können. Beispielsweise können die keramischen Partikel Al₂O₃, SiO₂, ZrO₂, Y₂O₃, Y₂O₃-stabilisiertes ZrO₂, Yttrium-Aluminium-Granat, Mullit, Si₃N₄, SiC oder Kohlenstoff, oder Kombinationen von zwei oder mehr dieser Materialien enthalten. Bei solchen Kombinationen kann es sich um Keramik-Blends oder Komposite aus unterschiedlichen Materialien innerhalb einzelner Partikel handeln, oder um Partikelmischungen, die Partikel aus unterschiedlichen Materialien enthalten. Bevorzugt sind Partikel die aus einem einzelnen Material, ausgewählt Al₂O₃, SiO₂, ZrO₂, Y₂O₃, Y₂O₃-stabilisiertem ZrO₂, Yttrium-Aluminium-Granat, Mullit, Si₃N₄, SiC und Kohlenstoff, bestehen, die aber ggf. auch als Mischungen eingesetzt werden, die Partikel aus unterschiedlichen Materialien enthalten. Das Keramikmaterial der keramischen Fasern kann mit dem Keramikmaterial der keramischen Partikel übereinstimmen, oder sie können sich unterscheiden. Bevorzugt ist die Übereinstimmung, um eine thermomechanische und thermodynamische Kompatibilität zu erreichen.

Bevorzugt weisen die keramischen Partikel eine durchschnittliche Teilchengröße (Volumenmittel, z.B. durch Laserstreuung bestimmt) von 3 µm oder weniger, stärker bevorzugt 2 µm oder weniger und noch stärker bevorzugt 1 µm oder weniger auf. Darüber hinaus ist bevorzugt, dass die durchschnittliche Teilchengröße 0,1 µm oder mehr beträgt. Weiter ist bevorzugt, dass keine Partikel mit einer Teilchengröße > 25 µm, z.B. bestimmt durch Laserstreuung, vorhanden sind. Stärker ist es bevorzugt, dass keine Partikel mit einer Teilchengröße > 15 µm vorhanden sind. Keramikpulver mit diversen Teilchengrößenverteilungen sind kommerziell erhältlich. Sofern notwendig oder gewünscht kann die Teilchengröße z.B. durch Vermahlen der Partikel eingestellt werden.

Insbesondere bevorzugt als keramische Partikel sind Mischungen solcher Partikel mit einer bimodalen Teilchengrößenverteilung (Volumenanteil gegen Teilchengröße, z.B. durch Laserstreuung bestimmt), die einen Peak im Bereich von 0,05 bis 0,3 µm, bevorzugt im Bereich von 0,08 bis 0,2 µm, und einen Peak im Bereich von 0,5 bis 3,0 µm, bevorzugt im Bereich von 0,7 bis 1,2 µm aufweisen. Darüber hinaus ist bevorzugt das der Peak im Bereich von 0,05 bis 0,3 µm, bevorzugt im Bereich von 0,08 bis 0,2 µm, für einen Volumenanteil von 3 bis 25 Vol.% der Partikel steht, und der Peak im Bereich von 0,5 bis 3,0 µm, bevorzugt im Bereich von 0,7 bis 1,2 µm, für einen Volumenanteil von 75 bis 97 Vol.% der Partikel steht. Der Volumenanteil der Partikel in den jeweiligen Größen kann bei Bedarf bestimmt werden aus der kumulativen Größenverteilung der Partikel, wie beispielsweise durch Laserstreuung gemessen. In der Regel können diese bevorzugten Schlicker mit den bevorzugten Partikelgrößen jedoch bequem durch Mischen von keramischen Partikeln mit den gewünschten Größen erhalten werden.

Der in Schritt a) des erfindungsgemäßen Verfahrens eingesetzte Schlicker enthält 10 bis 40 Vol.% der keramischen Partikel, bezogen auf das Gesamtvolumen des Schlickers als 100 Vol.%. Bevorzugt sind mindestens 20 Vol.% keramischer Partikel (d.h. 20 bis 40 Vol.%), stärker bevorzugt mindestens 25 Vol.% keramischer Partikel (d.h. 25 bis 40 Vol.%), und besonders bevorzugt mindestens 30 Vol.% keramischer Partikel (d.h. 30 bis 40 Vol.%), enthalten. Die beim Imprägnieren durch den Schlicker eingebrachten Partikel sind in der Regel auch im Prepreg enthalten, das in Schritt b) des erfindungsgemäßen Verfahrens bereitgestellt wird. Wie für den Fachmann ersichtlich sein wird, wird jedoch der Feststoffanteil des Schlickers durch das Reduzieren des Wassergehalts in Schritt b) erhöht, so dass der Volumenanteil der keramischen Partikel im bereitgestellten Prepreg höher ist. Auch der Grünkörper enthält die keramischen Partikel, wobei jedoch z.B. beim Bereitstellen des geformten Verbundmaterials in Schritt c) gewisse Anteile des ursprünglich beim Imprägnieren aufgenommenen Schlickers und der darin enthaltenen Partikel entfernt werden können. Beispielsweise kann bei einem Laminiervorgang überschüssiger Schlicker aus dem Verbundmaterial herausgepresst werden.

Der in Schritt a) des erfindungsgemäßen Verfahrens eingesetzte Schlicker, und damit auch die erfindungsgemäßen Prepregs, beinhalten neben den keramischen Partikeln ein alkoholisches organisches Lösungsmittel, ausgewählt aus:
(ii-1) 21 bis 35 Gew.%, bezogen auf das Gesamtgewicht der keramischen Partikel im Schlicker, Glycerin,
(ii-2) 21 bis 35 Gew.%, bezogen auf das Gesamtgewicht der keramischen Partikel im Schlicker, eines Oligo- oder Polyethylenglycols mit einem mittleren Molekulargewicht von maximal 800 g/mol,
(ii-3) 21 bis 35 Gew.%, bezogen auf das Gesamtgewicht der keramischen Partikel im Schlicker, mindestens eines C2-C6-Alkandiols, und
(ii-4) 21 bis 35 Gew.%, bezogen auf das Gesamtgewicht der keramischen Partikel im Schlicker, eines Gemischs aus zwei oder mehr Komponenten, ausgewählt aus einem C2-C6-Alkandiol, einem Oligo- oder Polyethylenglycol mit einem mittleren Molekulargewicht von maximal 800 g/mol, und Glycerin.

Wie aus dieser Aufzählung ersichtlich wird, handelt es sich bei den Ausführungsformen (ii-1) bis (ii-4) um alternative Ausführungsformen, die nicht in Kombination zum Einsatz kommen. Die Bezeichnung als alkoholisches organisches Lösungsmittel gibt an, dass die entsprechenden Substanzen alkoholische Hydroxylgruppen (OH-Gruppen) aufweisen. Als Lösungsmittel sind sie bei der Verarbeitungstemperatur des Schlickers, typischerweise bei einer Temperatur von 20 °C, flüssig, in Wasser löslich und bevorzugt hygroskopisch. Das Lösungsmittel wirkt sich nicht negativ auf die Stabilität der Suspension aus. Das Lösungsmittel ist wie das Wasser ein Dispersionsmedium und umgibt die Pulverpartikel. Das keramische Pulver kann somit nicht agglomerieren.

Unter den Ausführungsformen (ii-1) bis (ii-4) ist die Ausführungsform (ii-1) bevorzugt, d.h. das Imprägnieren einer Anordnung keramischer Fasern in Schritt a) erfolgt bevorzugt mit einem Schlicker, der die folgenden Bestandteile umfasst:
10 bis 40 Vol.%, bezogen auf das Gesamtvolumen des Schlickers, keramische Partikel, 21 bis 35 Gew.%, bezogen auf das Gesamtgewicht der keramischen Partikel im Schlicker, Glycerin,
und Wasser.

Der Glyceringehalt des Schlickers in Schritt a) nach der bevorzugten Ausführungsform (ii-1) des erfindungsgemäßen Verfahrens, und damit auch in den nach einer bevorzugten Ausführungsform bereitgestellten Prepregs, beträgt 21 bis 35 Gew.%, bezogen auf das Gesamtgewicht der keramischen Partikel im Schlicker als 100 Gew.%. Glycerin ist hygroskopisch, in Wasser löslich und hat eine dispergierende Wirkung auf keramische Partikel. Die Verdunstung von Glycerin bei der Herstellung und der Verarbeitung ist zu vernachlässigen. Durch die Verwendung von Glycerin ist es bequem möglich, den Feststoffgehalt eines Schlickers nach dem Imprägnieren der Faseranordnung durch das Reduzieren des Wassergehalts des Schlickers einzustellen. So kann in Schritt a) des erfindungsgemäßen Verfahrens ein Schlicker mit niedrigerem Feststoffgehalt und dadurch niedrigerer Viskosität zum Imprägnieren der Faseranordnung verwendet werden. Ein vollständiges Imprägnieren der Faseranordnung, bei der der Schlicker (bzw. die Partikel) auch in ggf. vorhandene Faserbündel eindringen kann, ist somit möglich. Durch das anschließende Entfernen von Wasser (z.B. durch Verdunsten) kann ein erhöhter Feststoffgehalt erreicht werden. Dabei kann man sich die Tatsache zunutze machen, dass sich bei vorgegebener Temperatur und Luftfeuchtigkeit im Schlicker ein Gleichgewicht aus Glycerin und Wasser unabhängig vom Ausgangsgehalt an Wasser einstellt.

Stärker bevorzugt enthält der Schlicker nach der bevorzugten Ausführungsform (ii-1) des erfindungsgemäßen Verfahrens Glycerin in einer Menge von mindestens 24 Gew.%, noch stärker bevorzugt mindestens 25 Gew.% Glycerin, besonders bevorzugt mindestens 26 Gew.% Glycerin, bezogen auf das Gesamtgewicht der keramischen Partikel im Schlicker als 100 Gew.%. Bevorzugt enthält der Schlicker höchstens 30 Gew.% Glycerin, stärker bevorzugt höchstens 29 Gew.% Glycerin, besonders bevorzugt höchstens 28 Gew.% Glycerin, bezogen auf das Gesamtgewicht der keramischen Partikel im Schlicker als 100 Gew.%.

Gemäß der vorstehend beschriebenen Ausführungsform (ii-2) umfasst der in Schritt a) eingesetzte Schlicker als alkoholisches organisches Lösungsmittel ein Oligo- oder Polyethylenglycol mit einem mittleren Molekulargewicht von maximal 800 g/mol in einer Menge von 21 bis 35 Gew.%, bezogen auf das Gesamtgewicht der keramischen Partikel im Schlicker als 100 Gew.%.

Bevorzugt enthält der Schlicker nach der Ausführungsform (ii-2) des erfindungsgemäßen Verfahrens das Oligo- oder Polyethylenglycol in einer Menge von mindestens
24 Gew.%, stärker bevorzugt von mindestens 25 Gew.%, besonders bevorzugt von mindestens 26 Gew.%, bezogen auf das Gesamtgewicht der keramischen Partikel im Schlicker als 100 Gew.%. Bevorzugt enthält der Schlicker höchstens 30 Gew.% des Oligo- oder Polyethylenglycols, stärker bevorzugt höchstens 29 Gew.%, besonders bevorzugt höchstens 28 Gew.%, bezogen auf das Gesamtgewicht der keramischen Partikel im Schlicker als 100 Gew.%.

Das mittlere Molekulargewicht (typischerweise angegeben als Zahlenmittel) des Oligo- oder Polyethylenglycols beträgt vorzugsweise maximal 600 g/mol, stärker bevorzugt maximal 400 g/mol. Typischerweise sind im Oligo- oder Polyethylenglycol mindestens 10 Wiederholeinheiten (-C₂H₄O-) vorhanden.

Wie bereits vorstehend ausgeführt, gelten diese Angaben zur bevorzugten Struktur und/oder den bevorzugten Mengen des Oligo- oder Polyethylenglycols in gleicher Weise für erfindungsgemäße Prepregs, die mit Hilfe eines Schlickers gemäß Ausführungsform (ii-2) bereit gestellt werden.

Gemäß der vorstehend beschriebenen Ausführungsform (ii-3) umfasst der in Schritt a) eingesetzte Schlicker als alkoholisches organisches Lösungsmittel ein C2-C6-Alkandiol in einer Menge von 21 bis 35 Gew.%, bezogen auf das Gesamtgewicht der keramischen Partikel im Schlicker als 100 Gew.%. Dabei sind auch Gemische unterschiedlicher C2-C6-Alkandiole umfasst.

Bevorzugt enthält der Schlicker nach der Ausführungsform (ii-3) des erfindungsgemäßen Verfahrens das C2-C6-Alkandiol in einer Menge von mindestens
24 Gew.%, stärker bevorzugt von mindestens 25 Gew.%, besonders bevorzugt von mindestens 26 Gew.%, bezogen auf das Gesamtgewicht der keramischen Partikel im Schlicker als 100 Gew.%. Bevorzugt enthält der Schlicker höchstens 30 Gew.% des C2-C6-Alkandiols, stärker bevorzugt höchstens 29 Gew.%, besonders bevorzugt höchstens 28 Gew.%, bezogen auf das Gesamtgewicht der keramischen Partikel im Schlicker als 100 Gew.%.

Wie dem Fachmann geläufig bezeichnet der Begriff C2-C6-Alkandiol ein Alkan mit 2 bis 6 Kohlenstoffatomen, an dem 2 Wasserstoffatome durch OH-Gruppen ersetzt sind. Bevorzugt handelt es sich bei den OH-Gruppen im C2-C6-Alkandiol ausschließlich um primäre oder sekundäre, besonders bevorzugt ausschließlich um primäre OH-Gruppen.

Bevorzugt kommt in Ausführungsform (ii-3) ein C2-C4-Alkandiol zum Einsatz.

Stärker bevorzugt enthält der Schlicker als alkoholisches organisches Lösungsmittel gemäß Ausführungsform (ii-3) daher ein Lösungsmittel ausgewählt aus Ethan-1,2-diol, 1,2-Propandiol, 1,3-Propandiol, 1,4-Butandiol, 2-Methyl-1,3-propandiol und aus Gemischen von mindestens zweien dieser Lösungsmittel. Noch stärker bevorzugt enthält der Schlicker gemäß Ausführungsform (ii-3) als alkoholisches organisches Lösungsmittel ein Lösungsmittel ausgewählt aus Ethan-1,2-diol und 1,2-Propandiol, und besonders bevorzugt als alkoholisches organisches Lösungsmittel gemäß Ausführungsform (ii-3) ist Ethan-1,2-diol.

Wie bereits vorstehend ausgeführt, gelten diese Angaben zur bevorzugten Struktur und/oder den bevorzugten Mengen des C2-C6-Alkandiols in gleicher Weise für erfindungsgemäße Prepregs, die mit Hilfe eines Schlickers gemäß Ausführungsform (ii-3) bereit gestellt werden.

Gemäß der vorstehend beschriebenen Ausführungsform (ii-4) umfasst der in Schritt a) eingesetzte Schlicker als alkoholisches organisches Lösungsmittel ein Gemisch aus zwei oder mehr Komponenten, ausgewählt aus einem C2-C6-Alkandiol, einem Oligo- oder Polyethylenglycol mit einem mittleren Molekulargewicht von maximal 800 g/mol, und Glycerin in einer Menge von 21 bis 35 Gew.%, bezogen auf das Gesamtgewicht der keramischen Partikel im Schlicker als 100 Gew.%..

Bevorzugt enthält der Schlicker nach der Ausführungsform (ii-4) des erfindungsgemäßen Verfahrens das Gemisch in einer Menge von mindestens
24 Gew.%, stärker bevorzugt von mindestens 25 Gew.%, besonders bevorzugt von mindestens 26 Gew.%, bezogen auf das Gesamtgewicht der keramischen Partikel im Schlicker als 100 Gew.%. Bevorzugt enthält der Schlicker höchstens 30 Gew.% des Gemischs, stärker bevorzugt höchstens 29 Gew.%, besonders bevorzugt höchstens 28 Gew.%, bezogen auf das Gesamtgewicht der keramischen Partikel im Schlicker als 100 Gew.%.

In Bezug auf bevorzugte Oligo- oder Polyethylenglycole und bevorzugte C2-C6-Akandiole gelten für die Ausführungsform (ii-4) die zu Ausführungsform (ii-2) bzw. Ausführungsform (ii-3) gemachten Angaben entsprechend.

Wie bereits vorstehend ausgeführt, gelten diese Angaben zur bevorzugten Struktur der Komponenten des Gemischs und/oder den bevorzugten Mengen des Gemischs in gleicher Weise für erfindungsgemäße Prepregs, die mit Hilfe eines Schlickers gemäß Ausführungsform (ii-4) bereit gestellt werden.

Als konkrete Beispiele für alkoholische organische Lösungsmittel gemäß den Ausführungsformen (ii-2), (ii-3) oder (ii-4), die alternativ zu Glycerin erfindungsgemäß zum Einsatz kommen können, können die folgenden genannt werden:
- Oligo- oder Polyethylenglycol mit einem maximalen mittleren Molekulargewicht von 800 g/mol; Oligo- oder Polyethylenglycol mit einem maximalen mittleren Molekulargewicht von 800 g/mol als Gemisch mit Glycerin; Oligo- oder Polyethylenglycol mit einem maximalen mittleren Molekulargewicht von 800 g/mol mit mindestens einem Diol, ausgewählt aus 1,2-Propandiol, 1,3-Propandiol, 1,4-Butandiol, 2-Methyl-1,3-propandiol und Ethan-1,2-diol
- Ethan-1,2-diol; Ethan-1,2-diol als Gemisch mit Glycerin; Ethan-1,2-diol als Gemisch mit mindestens einem Diol, ausgewählt aus 1,2-Propandiol, 1,3-Propandiol, 1,4-Butandiol und 2-Methyl-1,3-propandiol; Ethan-1,2-diol als Gemisch mit Oligo- oder Polyethylenglycol mit einem maximalen mittleren Molekulargewicht von 800 g/mol
- 1,2-Propandiol; 1,2-Propandiol als Gemisch mit mindestens 40 Gew.%, bezogen auf das Gesamtgewicht des alkoholischen organischen Lösungsmittels als 100 Gew.%, von mindestens einem Lösungsmittel ausgewählt aus Glycerin, Oligo- oder Polyethylenglycol mit einem maximalen mittleren Molekulargewicht von 800 g/mol, und Ethan-1,2-diol;
- 1,3-Propandiol als Gemisch mit mindestens 40 Gew.%, bezogen auf das Gesamtgewicht des alkoholischen organischen Lösungsmittels als 100 Gew.%, von mindestens einem Lösungsmittel ausgewählt aus Glycerin, Oligo- oder Polyethylenglycol mit einem maximalen mittleren Molekulargewicht von 800 g/mol, und Ethan-1,2-diol;
- 1,4-Butandiol als Gemisch mit mindestens 50 Gew.%, bezogen auf das Gesamtgewicht des alkoholischen organischen Lösungsmittels als 100 Gew.%, von mindestens einem Lösungsmittel ausgewählt aus Glycerin, Oligo- oder Polyethylenglycol mit einem maximalen mittleren Molekulargewicht von 800 g/mol, und Ethan-1,2-diol;
- 2-Methyl-1,3-propandiol als Gemisch mit mindestens 50 Gew.%, bezogen auf das Gesamtgewicht des alkoholischen organischen Lösungsmittels als 100 Gew.%, von mindestens einem Lösungsmittel ausgewählt aus Glycerin, Oligo- oder Polyethylenglycol mit einem maximalen mittleren Molekulargewicht von 800 g/mol, und Ethan-1,2-diol.

Das Oligo- oder Polyethylenglycol mit einem mittleren Molekulargewicht von maximal 800 g/mol und/oder das C2-C6-Alkandiol können in Schlickern gemäß den Ausführungsformen (ii-2) bis (ii-4) eingesetzt werden, um z.B. die Viskosität des Schlickers geeignet anzupassen. Schlicker, die diese Substanzen alternativ zu oder als Gemisch mit Glycerin enthalten, können gegenüber Glycerin eine reduzierte Viskosität aufweisen und so den Imprägniervorgang erleichtern. Dieser Effekt ist besonders ausgeprägt bei hohen Gehalten des alkoholischen Lösungsmittels im Schlicker von mindestens 21 Gew.%. Darüber hinaus kann die Verwendung des Oligo- oder Polyethylenglycol mit einem mittleren Molekulargewicht von maximal 800 g/mol und/oder des C2-C6-Alkandiols in Schlickern gemäß den Ausführungsformen (ii-2) bis (ii-4) die Rückgewinnung des alkoholischen Lösungsmittels bei der Weiterverarbeitung der Prepregs zu Grünkörpern und darüber hinaus erleichtern, da sie im allgemeinen einen geringeren Kondensationspunkt gegenüber Glycerin aufweisen.

Der Gehalt des alkoholischen organischen Lösungsmittels des im Prepreg enthaltenen Schlickers relativ zu den im Schlicker enthaltenen keramischen Partikeln bleibt in der Regel gegenüber dem in Schritt a) des erfindungsgemäßen Verfahrens eingesetzten Schlicker unverändert, oder wird lediglich geringfügig reduziert (z.B. um weniger als 5 Gew.%, bevorzugt um weniger als 3 Gew.%, bezogen auf den Gehalt in dem in Schritt a) eingesetzten Schlicker als 100 Gew.%). Bevorzugt bleibt der Gehalt unverändert. Im Grünkörper sinkt der Anteil des alkoholischen organischen Lösungsmittels relativ zu den keramischen Partikeln als Folge der Konsolidierung in Schritt d).

Die flüssige Phase des in Schritt a) des erfindungsgemäßen Verfahrens eingesetzten Schlickers und des im Prepreg enthaltenen Schlickers enthält neben dem alkoholischen organischen Lösungsmittel Wasser als wesentlichen Bestandteil. Neben dem alkoholischen organischen Lösungsmittel und Wasser können dem Schlicker weitere Lösungsmittel, wie nicht-alkoholische organische Lösungsmittel, zugesetzt werden. In wirtschaftlicher und ökologischer Hinsicht ist es jedoch bevorzugt, dass mindestens 80 Vol.%, bevorzugt mindestens 90 Vol.% der flüssigen Phase des Schlickers (wie bei 20 °C bestimmt) von dem alkoholischen organischen Lösungsmittel, bevorzugt von Glycerin, und Wasser bereitgestellt werden. In der flüssigen Phase gelöste Feststoffe werden dabei nicht zum Volumen der flüssigen Phase gerechnet. Am stärksten bevorzugt besteht die flüssige Phase aus dem alkoholischen organischen Lösungsmittel, bevorzugt aus Glycerin, und Wasser.

Neben den keramischen Partikeln kann der Schlicker weitere Zusatzstoffe enthalten die die Handhabung des Schlickers, die Imprägnierung der Fasern, und/oder das Trocknen des Schlickers zum Bilden einer keramischen Matrix erleichtern. Solche Additive umfassen beispielsweise ein Dispergiermittel oder organische Additive zur Beeinflussung der Viskosität (z.B. Thixotropiermittel). Wird ein solches Dispergiermittel verwendet, so ist es typischerweise in Mengen von bis zu 5 Gew.%, bevorzugt bis zu 2 Gew.%, bezogen auf den Gesamtfeststoffgehalt des Schlickers als 100 Gew.%, enthalten. Als Dispergiermittel geeignet sind z.B. Polymere mit ionischen Gruppen, wie Carbonsäuregruppen in protonierter oder ionischer Form, die kovalent mit der Polymerkette verbunden sind. Ein bevorzugtes Dispergiermittel ist ein Acrylsäure-Polymer oder Acrylsäure-Copolymer. Für das Copolymer ist es bevorzugt, dass der Gehalt der polymerisierten Acrylsäureeinheiten 50 mol% oder mehr, vorzugsweise 70 mol% oder mehr beträgt. Besonders bevorzugt ist Polyacrylsäure. Bei dem Polymer als Dispergiermittel handelt es sich typischerweise um ein Polymer mit einem niedrigen Molekulargewicht, z.B. mit einem Molekulargewicht von < 5000 g/mol, bevorzugt < 2000 g/mol.

Die Zugabe eines organischen Bindemittels zu dem in Schritt a) des erfindungsgemäßen Verfahrens eingesetzten und im Prepreg enthaltenen Schlicker ist nicht notwendig. Auch der Einsatz eines Paraffins oder eines Wachses ist nicht notwendig. Ein organisches Bindemittel kann jedoch gegebenenfalls zum Steuern gewünschter Eigenschaften des Schlickers eingesetzt werden. Beispielsweise kann die Lagerfähigkeit der Prepregs erhöht werden, indem ein organisches Bindemittel eingesetzt wird, das in der Lage ist ein Gel zu bilden. Wird das Prepreg bei der Herstellung getrocknet und wiederbefeuchtet, kann der Binder verfestigt oder ausgehärtet werden. Ein dreidimensional vernetzendes Bindemittel kann dazu dienen, die Form des geformten Verbundmaterials zu stabilisieren. Auch der Formvorgang in Schritt c), z.B. das Pressen während eines Laminierungsschritts, kann durch die Zugabe eines Bindemittels beeinflusst werden. Es kann beeinflusst werden, dass die keramischen Partikel im Faserbündel fixiert werden und nicht herausgepresst werden. Im Falle einer Anordnung von imprägnierten Kurzfasern kann diese durch den Binder fixiert und eine Verarbeitung somit erleichtert werden.

Wird ein solches organisches Bindemittel verwendet, so ist es typischerweise in Mengen von bis zu 10 Gew.%, bezogen auf das Gesamtgewicht der keramischen Partikel im Schlicker als 100 Gew.%, enthalten. Bevorzugt beträgt der Gehalt des organischen Bindemittels 0 bis 5 Gew.%, stärker bevorzugt 0 bis 2 Gew.%, und besonders bevorzugt 0 bis 1 Gew.%.

Wird ein organisches Bindemittel verwendet, so handelt es sich bei dem Bindemittel typischerweise um ein organisches Polymerbindemittel. Typische organische Polymerbindemittel sind Polymere mit einem Molekulargewicht von mehr als 10.000 g/mol. Eine Gruppe von Bindemitteln, die für diesen Zweck bekannt sind, sind Bindemittel die als wässrige Lösung von Polymeren eingesetzt werden können, wie z.B. Polyvinylalkohol, oder Polyvinylpyrrolidon. Als dreidimensional vernetzendes Polymer kann hier Gelatine genannt werden. Darüber hinaus können UV- härtende Bindemittel, insbesondere dreidimensional vernetzende UV-härtende Bindemittel als Beispiel genannt werden. Eine weitere Gruppe wird gebildet durch Bindemittel die als wässrige Dispersion von Polymerpartikeln zum Einsatz kommen, wie z.B. ein Polystyrolpolymer oder ein Polyacrylatpolymer. Typische mittlere Teilchengrößen wie z.B. mithilfe von Laserstreuung auf Basis des Teilchenvolumens bestimmt, liegen im Bereich von 0,1 bis 1 µm. Ein Prepreg kann durch einen Dispersionsbinder verfestigt werden, indem dieses getrocknet und zur Verarbeitung wiederbefeuchtet wird. Dies kann bei Faseranordnungen aus geschnittenen Kurzfasern von Vorteil sein.

Insgesamt ist es bevorzugt, dass 95 Gew.% oder mehr, stärker bevorzugt 97 Gew.% oder mehr, und noch stärker bevorzugt 98 Gew.% oder mehr des Feststoffgehalts des Schlickers (einschließlich von Feststoffen, die ggf. in der Mischung aus Wasser und dem alkoholischen organischen Lösungsmittel, bevorzugt Glycerin, gelöst sind) von den keramischen Partikeln bereitgestellt werden. Ebenso ist bevorzugt, dass 5 Gew.% oder weniger, stärker bevorzugt 3 Gew.% oder weniger, und noch stärker bevorzugt 2 Gew.% oder weniger des Feststoffgehalts des Schlickers durch die optionalen Zusatzstoffe, einschließlich des Dispergiermittels und des organischen Bindemittels bereitgestellt werden.

Insbesondere ist bevorzugt, dass der in Schritt a) des erfindungsgemäßen Verfahrens eingesetzte und im Prepreg enthaltene Schlicker aus den keramischen Partikeln, Wasser und dem alkoholischen organischen Lösungsmittel, bevorzugt Glycerin als essentielle Bestandteile, sowie evtl. einem Dispergiermittel und/oder evtl. einem organischen Bindemittel als optionalen Bestandteilen, besteht.

Um zu gewährleisten dass in Schritt a) des erfindungsgemäßen Verfahrens die Anordnung der keramischen Fasern vollständig und homogen mit dem Schlicker imprägniert wird, ist es bevorzugt dass der Schlicker in Schritt a) eine Viskosität von weniger als 10 Pas, stärker bevorzugt weniger als 5 Pas, und noch stärker bevorzugt eine Viskosität von weniger als 3,5 Pas aufweist. Die Viskosität kann beispielsweise bei einer Schergeschwindigkeit von 1 s⁻¹ und einer Temperatur von 20°C mit Hilfe eines Koaxial-Zylinder-Rotationsviskosimeters bestimmt werden.

Die Vorgehensweise beim Imprägnieren der Anordnung keramischer Fasern in Schritt a) des erfindungsgemäßen Verfahrens ist nicht speziell eingeschränkt, und es können eine Vielzahl von Verfahren verwendet werden, die dem Fachmann zu diesem Zweck bekannt sind, z.B. Aufsprühen des Schlickers auf die Faseranordnung, Gießen des Schlickers auf die Faseranordnung, Eintauchen der Faseranordnung in den Schlicker, Aufbringen des Schlickers auf die Faseranordnung mithilfe eines geeigneten Werkzeugs. Dass Imprägnieren kann in geeigneter Weise auch maschinell in einer Prepreganlage erfolgen. Die Infiltration der Faseranordnung mit dem Schlicker kann auch durch Überdruck oder Vakuum unterstützt werden. Die homogene Verteilung des Schlickers in der Faseranordnung kann durch Ultraschall unterstützt werden. Es besteht auch die Möglichkeit, nach dem Imprägnieren überschüssiges Schlickermaterial zu entfernen, z.B. mit einem Rakel oder einer Spachtel.

In Schritt b) des erfindungsgemäßen Verfahrens wird der Wassergehalt des Schlickers in der imprägnierten Faseranordnung reduziert, um ein Prepreg für einen keramischen Verbundwerkstoff zu erhalten.

Als Prepreg, als Kurzform abgeleitet aus dem Begriff "preimpregnated fibres", werden im Fachgebiet der keramischen Verbundwerkstoffe vorimprägnierte Faser-Matrix-Halbzeuge bezeichnet, die zur Herstellung eines Werkstoffs oder eines Bauteils aus einem keramischen Verbundwerkstoff ausgehärtet werden können. Als Matrix des Prepregs, bzw. als noch nicht ausgehärtete Vorstufe der Matrix im späteren keramischen Verbundwerkstoff, dient im Rahmen der Erfindung der hier definierte Schlicker.

Typischerweise erfolgt das Reduzieren des Wassergehalts in Schritt b), indem die imprägnierte Faseranordnung bei Bedingungen einer Temperatur und/oder einer relativen Luftfeuchtigkeit (hier auch als rel. Feuchte bezeichnet) gehalten wird, bei der Wasser aus dem Schlicker verdampft oder bevorzugt verdunstet. Wie für den Fachmann verständlich sein wird, sollten die Bedingungen so gewählt sein, dass das alkoholische organische Lösungsmittel, bevorzugt Glycerin, im Schlicker erhalten bleibt oder nur geringfügig reduziert (z.B. um weniger als 5 Gew.%, bevorzugt um weniger als 3 Gew.%, bezogen auf den Gehalt in dem in Schritt a) eingesetzten Schlicker als 100 Gew.%). Bevorzugt bleibt das Lösungsmittel erhalten. Dies ist jedoch unproblematisch, da das alkoholische organische Lösungsmittel einen vergleichsweise hohen Siedepunkt aufweist. Beispielsweise hat Glycerin einen Siedepunkt von 290°C (unter Zersetzung).

Wie vorstehend erwähnt, weisen die bevorzugten erfindungsgemäß bereit gestellten Prepregs mit einem relativ hohen Gehalt an alkoholischem organischen Lösungsmittel, bevorzugt Glycerin, im Schlicker den Vorteil auf, dass sie auch bei einem schnellen Reduzieren des Wassergehalts z.B. bei einer hohen Temperatur und/oder einer geringen Luftfeuchtigkeit nicht irreversibel ihre Hydroplastizität verlieren, d.h. selbst wenn die entzogene Menge an Wasser so groß ist, dass das erhaltene Prepreg keine plastischen sondern z.B. elastische Eigenschaften aufweist, kann durch eine Rückbefeuchtung des Prepregs wieder eine plastische Verformbarkeit erhalten werden. Darüber hinaus können über den Wassergehalt im Schlicker auch die Oberflächeneigenschaften des Prepregs, insbesondere seine Klebrigkeit, gesteuert werden. Bei der Verarbeitung eines Prepregs, z.B. zur Herstellung eines Laminats, ist es vorteilhaft dass das Prepreg eine klebrige Oberfläche aufweist, die das Laminieren erleichtert. Aufgrund der Anwesenheit des alkoholischen organischen Lösungsmittels, bevorzugt Glycerin, in relativ großen Mengen kann die Klebrigkeit der Oberfläche der Prepregs selbst nach längerer Lagerung unter typischen Bedingungen einer Temperatur von 20 bis 25 °C und einer rel. Feuchte von 30 bis 60 % noch aufrechterhalten werden. Gegebenenfalls kann auch die Klebrigkeit der Oberfläche durch Rückbefeuchten des Prepregs wiederhergestellt werden. Durch die Rückbefeuchtung nach dem Trocknen kann wie vorstehend beschrieben zudem die Verfestigung des Prepregs durch Binder erfolgen.

Insofern bietet das erfindungsgemäße Verfahren sowie die dabei bereit gestellten Prepregs dem Fachmann ein hohes Maß an Flexibilität bei der Fertigung und der Weiterverarbeitung der Prepregs.

Beispielsweise umfasst das Reduzieren des Wassergehalts des Schlickers in Schritt b) das Halten der imprägnierten Faseranordnung bei Bedingungen einer Temperatur von 50 bis 150 °C und 10 bis 30 % rel. Feuchte über einen Zeitraum von 1 min bis 2 h, bevorzugt von 1 min bis 1 h. Diese Variante wird hier auch allgemein als "Trocknen" bezeichnet.

Gemäß einer bevorzugten Variante, die z.B. bei der schnellen maschinellen Fertigung von Prepregs auf einer Prepreganlage von Bedeutung sein kann, umfasst das Reduzieren des Wassergehalts des Schlickers in Schritt b) das Halten der imprägnierten Faseranordnung bei Bedingungen einer Temperatur von 50 bis 150 °C und 10 bis 30 % rel. Feuchte über einen Zeitraum von 1 min bis 30 min, bevorzugt innerhalb von 1 min bis 15 min, besonders bevorzugt innerhalb von 3 min bis 10 min. Diese Variante wird hier auch als "schnelles Trocknen" bezeichnet. Wie vorstehend diskutiert eignet sie sich insbesondere für Ausführungsformen der vorliegenden Erfindung, bei denen in Schritt a) ein Schlicker mit einem relativ hohen Gehalt des alkoholischen organischen Lösungsmittels, bevorzugt Glycerin, eingesetzt wird, z.B. mit einem Gehalt von 21 Gew.% oder mehr.

Gemäß einer weiteren bevorzugten Variante umfasst das Reduzieren des Wassergehalts des Schlickers in Schritt b) eine hydrothermale Konditionierung, d.h. ein Halten der imprägnierten Faseranordnung bei einer kontrollierten Temperatur und einer kontrollierten Luftfeuchtigkeit über einen ausreichenden Zeitraum, dass sich ein Gleichgewichtszustand zwischen dem Wassergehalt des Schlickers im Prepreg und dem Wassergehalt der umgebenden Atmosphäre einstellt. Die hydrothermale Konditionierung kann beispielsweise in einer Klimakammer oder in einem Trockenofen mit kontrollierter Atmosphäre durchgeführt werden. Sie kann aber auch durch Lagerung und sogar durch Bearbeitung der imprägnierten Faseranordnung oder der Prepregs in einem klimatisierten Raum stattfinden.

Beispielhafte Bedingungen für die hydrothermale Konditionierung sind dabei eine Temperatur im Bereich von 10 bis 30 °C, eine rel. Feuchte von 30 bis 80 %, und ein Zeitraum von 1 bis 20 Stunden.

Bevorzugte Bedingungen für die hydrothermale Konditionierung sind eine Temperatur im Bereich von 10 bis 30 °C, besonders bevorzugt 20 bis 30 °C, eine rel. Feuchte von 30 bis 60 %, besonders bevorzugt 50 bis 60 %, und ein Zeitraum von 1 bis 10 Stunden, besonders bevorzugt 1 bis 5 Stunden. Sie eignen sich insbesondere für Ausführungsformen der vorliegenden Erfindung, bei denen in Schritt a) ein Schlicker mit einem relativ hohen Gehalt des alkoholischen organischen Lösungsmittels, bevorzugt Glycerin, eingesetzt wird, z.B. mit einem Gehalt von 21 Gew.% oder mehr.

Die beiden Vorgehensweisen (d.h. Trocknen bzw. schnelles Trocknen und hydrothermale Konditionierung) können auch geeignet kombiniert werden, z.B. indem durch Trocknen bzw. schnelles Trocknen ein Wassergehalt eingestellt wird, der dem gewünschten Wassergehalt nahekommt (auch als Vortrocknung bezeichnet), und anschließend durch hydrothermale Konditionierung der gewünschte Wassergehalt auf kontrollierte Weise eingestellt werden kann.

Da die erfindungsgemäßen Prepregs vorteilhafterweise, z.B. nach starkem Reduzieren des Wassergehalts durch Rückbefeuchtung in einen gut verarbeitbaren Zustand gebracht werden können, kann die hydrothermale Konditionierung wie oben definiert nicht nur zum Reduzieren des Wassergehalts in Schritt b) eingesetzt werden. D.h. der Gleichgewichtszustand kann nicht nur ausgehend von einem Zustand erreicht werden, in dem der Schlicker in der Faseranordnung einen höheren Wassergehalt aufweist als er dem Gleichgewichtszustand entspricht, sondern auch von einem Zustand ausgehend, in dem der Schlicker in der Faseranordnung einen geringeren Wassergehalt aufweist als er dem Gleichgewichtszustand entspricht. In diesem Fall kann die hydrothermale Konditionierung also auch zur Rückbefeuchtung des Prepregs nach Schritt b) eingesetzt werden.

So kann beispielsweise zunächst durch Trocknen bzw. schnelles Trocknen wie vorstehend beschrieben ein gut handhabbares und lagerbares Prepreg bereitgestellt werden, das anschließend vor der Weiterverarbeitung in Schritt c) einer hydrothermalen Konditionierung unterzogen wird, um optimale Verarbeitungseigenschaften zu gewährleisten. Durch Trocknen bzw. schnelles Trocknen und hydrothermale Konditionierung kann zudem die Verfestigung des Prepregs durch Binder erfolgen.

Ebenso kann beispielsweise zunächst in Schritt b) mit einem beliebigen Verfahren zum Reduzieren des Wassergehalts, auch mit Hilfe des Trocknens bzw. schnellen Trocknens oder der hydrothermalen Konditionierung, ein gut handhabbares und lagerbares Prepreg bereit gestellt werden, das anschließend unter Bedingungen einer geringen Luftfeuchtigkeit über einen längeren Zeitraum gelagert wird, und daher ebenfalls vor der Weiterverarbeitung in Schritt c) einer hydrothermalen Konditionierung unterzogen wird, um optimale Verarbeitungseigenschaften zu gewährleisten.

Das erfindungsgemäße Verfahren kann daher
auch eine Lagerung des in Schritt b) erhaltenen Prepregs bei einer relativen Luftfeuchtigkeit von höchstens 60% beinhalten. Die Dauer der Lagerung ist nicht begrenzt, es kann sich um mehrere Stunden oder auch mehrere Tage und Monate handeln, falls gewünscht.

Wie für den Fachmann ersichtlich, führt das Reduzieren des Wassergehalts in Schritt b) zum einen zu einer Erhöhung der Viskosität des Schlickers in der Faseranordnung, so dass das Prepreg handhabbar wird, ohne dass der Schlicker herausläuft oder -tropft. Zum anderen wird der Volumenanteil der keramischen Partikel erhöht, und damit das Schwinden des Prepregs bzw. des daraus hergestellten Grünkörpers bei der weiteren Verarbeitung zum keramischen Verbundwerkstoff begrenzt. Darüber hinaus kann ein geeigneter Wassergehalt in Kombination mit dem alkoholischen organischen Lösungsmittel, bevorzugt Glycerin, wie vorstehend erwähnt auch für eine Klebrigkeit der Oberfläche des Prepregs sorgen.

Beispielsweise kann das Reduzieren des Wassergehalts in Schritt b) so durchgeführt werden, dass der Volumenanteil der keramischen Partikel, bezogen auf das Gesamtvolumen des Schlickers im Prepreg, nach dem Schritt b) um mindestens 5 Vol.% höher ist als vor dem Schritt b). Alle Prozentangaben, d.h. auch der Grenzwert von 5 Vol.%, beziehen sich dabei auf das Gesamtvolumen des Schlickers d.h. ausgehend von der Verwendung eines Schlickers mit einem Anteil keramischer Partikel von z.B. 38 Vol.% in Schritt a) würde nach Durchführen des Schritts b) ein Prepreg erhalten, in dem der Schlicker einen Anteil keramischer Partikel von mindestens 43 Vol.% aufweist.

Stärker bevorzugt beträgt der Volumenanteil der keramischen Partikel im Prepreg, bezogen auf das Gesamtvolumen des Schlickers im Prepreg, mindestens 45 Vol.%, noch stärker bevorzugt mindestens 50 Vol.%, und besonders bevorzugt mindestens 52 Vol.%. Insofern ist es bevorzugt, dass der Wassergehalt des Schlickers in dem in Schritt b) bereit gestellten Prepreg entsprechend eingestellt wird.

Bevorzugt beträgt der Volumenanteil der keramischen Partikel im Prepreg, bezogen auf das Gesamtvolumen des Schlickers im Prepreg, höchstens 60 Vol.%, und stärker bevorzugt höchstens 57 Gew.%.

Der Volumenanteil der keramischen Partikel im Prepreg, bezogen auf das Gesamtvolumen des Schlickers im Prepreg, kann dabei z.B. indirekt durch einen Vergleich des Gewichts der imprägnierten Faseranordnung vor und nach dem Reduzieren des Wassergehalts im Schlicker in Schritt b) des erfindungsgemäßen Verfahrens bestimmt werden. Der Volumenanteil der keramischen Partikel in dem Schlicker, der in Schritt a) zum Imprägnieren verwendet wird, kann bequem direkt im Schlicker bestimmt werden. Die Menge des im Prepreg vorhandenen Schlickers ist ebenso durch einen Vergleich des Gewichts der Faseranordnung vor und nach dem Imprägnieren leicht zu bestimmen. Aus der gemessenen Menge an Wasser, die in Schritt b) entfernt wird, können so die verbleibende Menge an Wasser, sowie das Volumen der keramischen Partikel in der verbleibenden Menge Wasser und Glycerin berechnet werden.

Der Wassergehalt des Schlickers im Prepreg sollte, zumindest bei Verarbeitung des Prepregs, vorteilhafterweise so eingestellt sein, dass der Schlicker dem Prepreg eine klebrige Oberfläche verleiht. Für eine enthaltene Menge des alkoholischen organischen Lösungsmittels, bevorzugt Glycerin, im Schlicker kann der Wassergehalt, der zu einer klebrigen Oberfläche führt, bequem durch Routineversuche ermittelt werden, insbesondere durch Testen der Klebrigkeit durch einfaches Berühren der Oberfläche des Prepregs. Die Klebrigkeit kann auch durch einen T-Schältest festgestellt werden. Die Schälkraft, bestimmt durch einen Schältest mit einem Probestück das aus zwei laminierten Prepreg-Tapes mit einer Breite von 25 mm hergestellt wurde, sollte mindestens 0,5 N/25 mm betragen.

Ein bevorzugter Wasseranteil des Schlickers im Prepreg, bei dem typischerweise eine vorteilhafte Klebrigkeit des Schlickers gewährleistet ist, beträgt 4 bis 13 Gew.%, stärker bevorzugt 4 bis 11 Gew.% und besonders bevorzugt 4 bis 8 Gew.%, bezogen auf das Gesamtgewicht des Schlickers im Prepreg als 100 Gew.%. Der Wasseranteil kann beispielsweise bestimmt werden, indem das Prepreg einer Trocknung unterzogen wird, bei dem das Wasser vollständig entfernt wird.

Wie vorstehend bereits erwähnt gelten die Angaben in Bezug auf den Gehalt des alkoholischen organischen Lösungsmittels in Bezug auf das Gesamtgewicht der keramischen Partikel in dem Schlicker, der in Schritt a) eingesetzt wird, auch für den im Prepreg enthaltenen Schlicker. Daher beträgt der Gehalt des alkoholischen organischen Lösungsmittels, bevorzugt Glycerin, des Schlickers in den bereitgestellten Prepregs 21 bis 35 Gew.%, bezogen auf das Gesamtgewicht der keramischen Partikel im Schlicker als 100 Gew.%. Bevorzugt enthält der Schlicker das alkoholische organische Lösungsmittel, bevorzugt Gylcerin, in einer Menge von mindestens 24 Gew.%, stärker bevorzugt mindestens 25 Gew.%, besonders bevorzugt mindestens 26 Gew.%, bezogen auf das Gesamtgewicht der keramischen Partikel im Schlicker als 100 Gew.%. Bevorzugt enthält der Schlicker höchstens 30 Gew.% des alkoholischen organischen Lösungsmittels, bevorzugt Glycerin, stärker bevorzugt höchstens 29 Gew.%, und besonders bevorzugt höchstens 28 Gew.%, bezogen auf das Gesamtgewicht der keramischen Partikel im Schlicker als 100 Gew.%.

Das Volumenverhältnis der keramischen Fasern im Prepreg zu dem darin enthaltenen Schlicker kann in Abhängigkeit z.B. der Faserarchitektur der keramischen Fasern in der Faseranordnung, und ihrer Fähigkeit zum Zurückhalten des Schlickers erheblich variieren. Beispielsweise kann der Volumenanteil der keramischen Fasern im Prepreg 15 bis 60 Vol.% betragen, bezogen auf das Gesamtvolumen des Prepregs.

In Schritt c) des erfindungsgemäßen Verfahrens wird ein geformtes Verbundmaterial aus einem oder mehreren der gemäß Schritt b) erhaltenen Prepregs bereit gestellt. Auch ein so bereit gestelltes geformtes Verbundmaterial, das eines oder mehrere der gemäß Schritt b) erhaltenen Prepregs umfasst, stellt ein erfindungsgemäßes Material dar.

Die erfindungsgemäßen Prepregs können in diesem Verfahrensschritt c) vorteilhafterweise ohne großen Aufwand in eine gewünschte Form gebracht werden.

Da sie, wie vorstehend ausgeführt, durch Einstellen des Wassergehalts im enthaltenen Schlicker, ggf. mit Hilfe einer Rückbefeuchtung des Schlickers, mit einer klebrigen Oberfläche bereit gestellt werden können, eignen sie sich z.B. besonders gut zum Bilden eines geformten Verbundmaterials in Form eines Laminats.

Die Anwesenheit des Schlickers erlaubt es den Fasern in den Prepregs, sich bei der Bildung eines geformten Verbundmaterials umzuordnen und so Spannungen oder die Beschädigung von Fasern zu vermeiden. Auch können die Prepregs ohne hohen Druck miteinander verbunden werden, was ebenfalls dazu beiträgt, die Beschädigung von Fasern zu vermeiden.

Darüber hinaus können Prepregs, die in Schritt c) zum Bilden des geformten Verbundmaterials kombiniert wurden, vor dem Konsolidieren in Schritt d) auch wieder getrennt und in anderer Weise wieder kombiniert werden, falls dies z.B. im Rahmen einer Korrektur der erhaltenen Form notwendig werden sollte.

Das Formverfahren zum Bereitstellen eines geformten Verbundmaterials ist keinen besonderen Beschränkungen unterworfen, und es können eine Reihe von Verfahrensschritten beispielhaft genannt werden, die einzeln oder auch in Kombination durchgeführt werden können.

Das Bereitstellen eines geformten Verbundmaterials in Schritt c) kann beispielsweise einen Schritt beinhalten, bei dem das Prepreg durch Zuschneiden oder Stanzen in eine gewünschte Form gebracht wird.

Das Bereitstellen eines geformten Verbundmaterials kann beispielsweise das Aufbringen eines oder mehrerer Prepregs auf einen geformten Träger beinhalten, wobei das Aufbringen auch so durchgeführt werden kann, dass eines oder mehrere Prepregs um ein geformtes Trägermaterial gewunden werden. So kann beispielsweise, ggf. nach einen zusätzlichen Trockenschritt oder nach dem Konsolidierungsschritt, eine Hohlform erzeugt werden, indem das Trägermaterial anschließend wieder entfernt wird.

Geeignete geformte Trägermaterialien sollten bevorzugt eine nicht flexible Oberfläche bereitstellen und sollten bevorzugt in der Lage sein, einer Wärmebehandlung zum Bereitstellen eines Grünkörpers ohne Formänderung zu widerstehen. Typische Trägermaterialien können beispielsweise aus Gips, Holz, Metall oder aus Keramik hergestellt sein. In Bezug auf die Form des geformten Trägermaterials gibt es keine besonderen Einschränkungen. Geeignete Formen umfassen Formwerkzeuge unterschiedlicher Geometrien, in die ein Prepreg eingebracht werden kann, oder Formen mit einer äußeren Oberfläche, wie Zylinder, auf die ein Prepreg aufgebracht werden kann.

Ein bevorzugter Verfahrensschritt im Rahmen des Bereitstellens eines geformten Verbundmaterials in Schritt c) des erfindungsgemäßen Verfahrens ist das Laminieren von zwei oder mehr der in Schritt b) erhaltenen Prepregs. Demzufolge ist auch eine bevorzugte Ausführungsform des in Schritt c) bereit gestellten geformten Verbundmaterials ein Laminat aus zwei oder mehr der erfindungsgemäßen Prepregs. Für den Fachmann ersichtlich, liegen die verwendeten Prepregs, die zur Herstellung des Laminats bereitgestellt werden, bevorzugt in Form eines Flächengebildes vor. Darüber hinaus ist es bevorzugt dass die Prepregs beim Vorgang des Laminierens eine klebrige Oberfläche aufweisen. Wie vorstehend erläutert kann dies durch ein entsprechendes Einstellen des Wassergehalts im Schlicker erreicht werden der im Prepreg enthalten ist.

Zum Laminieren der Prepregs im Rahmen der Erfindung werden die Prepregs typischerweise so z.B. durch Stapeln in direkten Kontakt miteinander gebracht, dass sich ihre Oberflächen berühren. Wenn die gewünschte Anzahl von Prepregs kombiniert wurde, wird das Laminieren im Allgemeinen durch Anwenden von Druck und ggf. Temperatur (z.B. im Autoklav) durchgeführt. Vorteilhafterweise muss der Druck, der zum Laminieren der erfindungsgemäßen Prepregs aufgebracht wird, nicht hoch sein. Dies liegt daran, dass der Schlicker, der die keramischen Fasern umgibt, z.B. aufgrund seines Gehalts an alkoholischem organischen Lösungsmittel fließfähig bleibt, so dass die Fasern in einem Prepreg ihre Position bezüglich der Fasern in einem darunterliegenden und/oder darüberliegenden Prepreg im Laminat flexibel anpassen können. Darüber hinaus erlaubt es, wie vorstehend erläutert, die Möglichkeit zum Bereitstellen einer klebrigen Oberfläche der Prepregs die Prepregs ohne die Notwendigkeit hoher Drücke aneinanderhaften zu lassen.

So kann vorteilhafterweise die Belastung der keramischen Fasern während des Laminierens reduziert werden, und die Beschädigung, z.B. das Brechen von Fasern kann verhindert werden. Im Allgemeinen überschreitet der aufgebrachte Druck beim Laminieren der Prepregs nicht den Wert von 1000 kPa, bevorzugt nicht den Wert von 100 kPa. Das Laminieren kann beispielsweise in einer festen Form durchgeführt werden. Vorteilhafterweise kann beispielsweise auch ein flexibler Vakuumbeutel eingesetzt werden, der nach Einbringen eines Prepregstapels evakuiert wird, z.B. auf einen Restdruck von 50 kPa und weniger, wie z.B. 5 bis 40 kPa, so dass der auf den Vakuumbeutel einwirkende Umgebungsdruck für die zum Laminieren notwendige Druckbeaufschlagung sorgt. Bei dieser Vorgehensweise kann vorteilhafterweise der Schritt d) des Konsolidierens durch Reduzieren des Wasser- und Glyceringehalts ebenfalls vakuumunterstützt im Vakuumbeutel durchgeführt werden.

Laminate von Prepregs, die als bevorzugte geformte Verbundmaterialien erfindungsgemäß bereit gestellt werden können, umfassen stärker bevorzugt 2 bis 40, besonders bevorzugt 2 bis 20 Prepregs, in Form von miteinander laminierten Flächengebilden.

Auch vor oder nach dem Laminieren kann die Form der Prepregs selbst angepasst werden, z.B. durch Zuschneiden, Vernähen oder Stanzen der Prepregs oder des Laminats. Das Laminat kann, sofern gewünscht, auf einem geformten Trägermaterial bereitgestellt werden. Dabei kann das Laminat nach dem Laminieren auf ein geformtes Trägermaterial aufgebracht werden, so dass ein Laminat erhalten wird, das eine vorgegebene dreidimensionale Form aufweist. Alternativ können 2 oder mehr Prepregs auf einem geformten Trägermaterial miteinander laminiert werden, so dass ein Laminat erhalten wird, das eine vorgegebene dreidimensionale Form aufweist. Geeignete geformte Trägermaterialien sollten bevorzugt eine nicht flexible Oberfläche bereitstellen und sollten bevorzugt in der Lage sein, einer Wärmebehandlung zum Bereitstellen eines Grünkörpers ohne Formänderung zu widerstehen. Typische Trägermaterialien können beispielsweise aus Gips, Holz, Metall oder aus Keramik hergestellt sein. In Bezug auf die Form des geformten Trägermaterials gibt es keine besonderen Einschränkungen. Geeignete Formen umfassen Formwerkzeuge unterschiedlicher Geometrien, in die ein Laminat eingebracht werden kann oder in denen ein Laminat gebildet werden kann, oder Formen mit einer äußeren Oberfläche, wie Zylinder, auf die ein Laminat aufgebracht werden kann oder auf denen ein Laminat gebildet werden kann.

Bei der Bereitstellung des geformten Verbundmaterials, z.B. durch Laminieren von Prepregs, kann beispielsweise ein Faservolumengehalt im geformten Verbundmaterial von 30 Vol.% oder mehr, bezogen auf das Gesamtvolumen des geformten Verbundmaterials als 100 Vol.%, erreicht werden. So können vorteilhafte mechanische Eigenschaften gewährleistet werden. Falls notwendig und gewünscht, kann zum Einstellen eines hohen Faservolumengehalts beim Vorgang des Formens in Schritt c) ein Teil des Schlickers aus dem/den Prepregs gepresst werden, die das geformte Verbundmaterial bilden.

In Schritt d) des erfindungsgemäßen Verfahrens erfolgt das Konsolidieren des geformten Verbundmaterials, das in Schritt c) bereitgestellt wird, durch Reduzieren des Wassergehalts und des Gehalts an alkoholischem organischen Lösungsmittel, so dass ein Grünkörper erhalten wird.

Wie vorstehend erwähnt, enthält der zur Bereitstellung des Prepregs und des geformten Verbundmaterials in den Schritten a) bis c) des erfindungsgemäßen Verfahrens eingesetzte Schlicker in einer bevorzugten Ausführungsform 21 bis 35 Gew.% des alkoholischen organischen Lösungsmittels, bevorzugt Glycerin. Es ist auch bevorzugt, dass der Gehalt an alkoholischem organischen Lösungsmittel, bevorzugt Glycerin, des geformten Verbundmaterials in Schritt d) soweit reduziert wird, dass sein Gehalt im Matrixmaterial, das die keramischen Fasern im Grünkörper umgibt, nach Durchführen der Konsolidierung 20 Gew.% oder weniger, stärker bevorzugt 18 Gew.% oder weniger, besonders bevorzugt 16 Gew.% oder weniger, bezogen auf das Gesamtgewicht der keramischen Partikel im Matrixmaterial, beträgt. Andererseits ist es auf Grund einer verkürzten Konsolidierungsdauer bevorzugt, dass noch alkoholisches organisches Lösungsmittel, bevorzugt Glycerin, im Grünkörper enthalten ist, so dass der Gehalt des alkoholischen organischen Lösungsmittels bevorzugt 5 Gew.% oder mehr, besonders bevorzugt 10 Gew.% oder mehr, bezogen auf das Gesamtgewicht der keramischen Partikel im Matrixmaterial, beträgt.

Der Wassergehalt des geformten Verbundmaterials kann in Schritt d) soweit reduziert werden, dass im erhaltenen Grünkörper kein Wasser oder nur noch Restmengen an Wasser im Matrixmaterial vorhanden sind. Der Wassergehalt eines in Schritt d) des erfindungsgemäßen Verfahren bereitgestellten Grünkörpers beträgt bevorzugt 5 Gew.% oder weniger, stärker bevorzugt 3 Gew.% oder weniger, bezogen auf das Gesamtgewicht des Grünkörpers als 100 Gew.%.

Wie für den Fachmann ersichtlich wird als Matrixmaterial dabei das Material im Grünkörper bezeichnet, dass durch das Reduzieren des Wassergehalts und des Gehalts an alkoholischem organischen Lösungsmittel in Schritt d) aus dem Schlicker hervorgeht, der in den Prepregs bzw. dem geformten Verbundmaterial enthalten war. Das Matrixmaterial bildet bei einem Sintern des Grünkörpers die keramische Matrix, die im keramischen Verbundwerkstoff die keramischen Fasern umgibt. Das Matrixmaterial enthält daher die keramischen Partikel und bevorzugt das alkoholische organische Lösungsmittel, als optionale Bestandteile Restmengen an Wasser, und/oder Zusatzstoffe die ggf. im Schlicker enthalten waren, wie z.B. ein organisches Bindemittel, ein Dispergiermittel und/oder ein Additiv zur Beeinflussung der Viskosität,

Geeignete Maßnahmen, die in Schritt d) des erfindungsgemäßen Verfahrens zum Reduzieren des Wassergehalts und des Gehalts an alkoholischem organischem Lösungsmittel eingesetzt werden können, stehen dem Fachmann ohne weiteres zur Verfügung. Sie können insbesondere das Erwärmen und/oder das Halten des geformten Verbundmaterials unter Unterdruck umfassen. Beim Erwärmen wird das geformte Verbundmaterial vorzugsweise Temperaturen im Bereich von 50 bis 200 °C, stärker bevorzugt 100 bis 170 °C, und besonders bevorzugt 100 bis 150°C ausgesetzt. Wird bei der Herstellung ein alkoholisches organisches Lösungsmittel, wie Glycerin, mit einem hohen Siedepunkt/ Zersetzungpunkt eingesetzt, der oberhalb der Temperatur liegt, die beim Erwärmen eingesetzt werden soll, so ist es bevorzugt, beim Erwärmen zur Unterstützung des Reduzierens des Gehalts an alkoholischem organischen Lösungsmittel das erwärmte Verbundmaterial in einem Gasstrom oder unter Unterdruck zu halten und das Lösungsmittel zu verdunsten. Als Gasstrom kann hier z.B. ein Luftstrom eingesetzt werden, der durch ein Gebläse erzeugt wird, oder ein Strom eines Inertgases. Die Dauer des Konsolidierungsschritts kann an die gewünschte Zusammensetzung des Grünkörpers angepasst werden. Typischerweise wird der Konsolidierungsvorgang höchstens 15 Stunden, bevorzugt höchstens 12 Stunden und besonders bevorzugt höchstens 11 h in Anspruch nehmen.

Der Grünkörper für einen keramischen Verbundwerkstoff, wie er mit Hilfe des erfindungsgemäßen Verfahrens bereit gestellt wird, enthält ebenfalls die keramischen Fasern, die in Schritt a) des Verfahrens imprägniert wurden, und die als Verstärkungsstruktur im keramischen Verbundwerkstoff vorhanden sein sollen. Darüber hinaus enthält der Grünkörper die keramischen Partikel als Vorläufer der keramischen Matrix des Verbundwerkstoffs, die diese Matrix bei einem Sintern des Grünkörpers bilden. Der Grünkörper enthält typischerweise auch noch alkoholisches organisches Lösungsmittel, bevorzugt Glycerin, wobei der Gehalt an alkoholischem organischen Lösungsmittel, bezogen auf das Gesamtgewicht der keramischen Partikel, aufgrund des Konsolidierungsschritts unterhalb des Gehalts an alkoholischem organischen Lösungsmittel der erfindungsgemäßen Prepregs liegt. Während des Sinterns wird das noch im Grünkörper verbliebene alkoholische organische Lösungsmittel rückstandsfrei ausgebrannt. Es kann als Porenbildner in der keramischen Matrix dienen, und so die Schadenstoleranz des keramischen Verbundwerkstoffs erhöhen.

Auch das optionale organische Bindemittel ist, sofern es im Schlicker enthalten war, im Grünkörper typischerweise noch vorhanden und wird während des Sinterns zur Bereitstellung des keramischen Verbundmaterials ausgebrannt.

Auch weitere optionale organische Bestandteile, wie der Dispergator oder das optionale organische Bindemittel sind, sofern sie im Schlicker enthalten waren, im Grünkörper typischerweise noch vorhanden und werden während des Sinterns zur Bereitstellung des keramischen Verbundmaterials ausgebrannt.

Bevorzugt handelt es sich auch bei dem Grünkörper um ein Laminat.

Wie vorstehend erläutert ist der Gehalt des alkoholischen organischen Lösungsmittels, bevorzugt Glycerin, im Grünkörper gegenüber dem Prepreg bzw. dem geformten Verbundmaterial reduziert. Bevorzugt liegt der Gehalt im Matrixmaterial, das die keramischen Fasern im Grünkörper umgibt bei 20 Gew.% oder weniger, stärker bevorzugt 18 Gew.% oder weniger, besonders bevorzugt 16 Gew.% oder weniger, bezogen auf das Gesamtgewicht der keramischen Partikel im Matrixmaterial. Andererseits ist es auf Grund einer verkürzten Konsolidierungsdauer bevorzugt, dass noch alkoholisches organisches Lösungsmittel, bevorzugt Glycerin, im Grünkörper enthalten ist, so dass der Gehalt bevorzugt 5 Gew.% oder mehr, besonders bevorzugt 10 Gew.% oder mehr, bezogen auf das Gesamtgewicht der keramischen Partikel im Matrixmaterial, beträgt.

Auch der Wassergehalt ist gegenüber dem Prepreg weiter reduziert, und der Grünkörper enthält kein oder nur eine kleine Menge Wasser, die z.B. auch nach dem Konsolidieren in Schritt d) des erfindungsgemäßen Verfahrens aufgrund der hygroskopischen Eigenschaften des verbliebenen alkoholischen organischen Lösungsmittels, bevorzugt Glycerin, aus der Umgebungsluft aufgenommen werden kann. Allerdings ist der Gehalt des alkoholischen organischen Lösungsmittels ausreichend gering, dass die Wasseraufnahme aus der Umgebung, sofern sie stattfindet, in so geringem Umfang auftritt, das sie sich nicht negativ auf die Stabilität des Grünkörpers auswirkt. Der Grünkörper ist daher typischerweise formstabil und bei einer Luftfeuchtigkeit von z.B. < 60% rel. Feuchte beliebig lagerbar. Der Wassergehalt des Grünkörpers beträgt bevorzugt 5 Gew.% oder weniger, stärker bevorzugt 3 Gew.% oder weniger, bezogen auf das Gesamtgewicht des Grünkörpers als 100 Gew.%.

Typischerweise ist der Grünkörper nicht flexibel. Typischerweise ist er auch nicht mehr klebrig. Bevorzugt handelt es sich um eine selbsttragende Struktur, d.h. eine Struktur, die ihre vorgegebene Form erhält, ohne dass sie gestützt werden muss.

Das Volumenverhältnis der keramischen Fasern im Grünkörper zu den darin enthaltenen keramischen Partikeln kann in Abhängigkeit z.B. der Faserarchitektur der keramischen Fasern in der Faseranordnung, und ihrer Fähigkeit zum Zurückhalten der Partikel erheblich variieren. Beispielsweise kann der Volumenanteil der keramischen Fasern im Grünkörper 15 bis 60 Vol.% betragen, bezogen auf das Gesamtvolumen des Grünkörpers als 100 Vol.%.

Eine weitere Ausführungsform der Erfindung stellt ein Verfahren zur Herstellung eines keramischen Verbundwerkstoffs bereit, das die Schritte der Herstellung eines Grünkörpers für einen keramischen Verbundwerkstoff gemäß dem vorstehend beschriebenen erfindungsgemäßen Verfahren, und des Sinterns des Grünkörpers umfasst.

Das Sintern erfolgt bei einer Temperatur, bei der ggf. noch im Grünkörper vorhandenes Wasser verdampft, das noch vorhandene alkoholische organische Lösungsmittel, sowie darüber hinaus ggf. vorhandene organische Verbindungen, wie ein Dispergator und ein Bindemittel, ausgebrannt werden und die keramischen Partikel durch Sintern miteinander verbunden werden, um so eine keramische Matrix zu bilden, die die keramischen Fasern im erhaltenen keramischen Verbundwerkstoff umgibt. Geeignete Temperaturen zum Sintern der keramischen Partikel können vom Fachmann ohne weiteres gewählt werden. Bevorzugt wird das Sintern bei einer Temperatur im Bereich von 1100 bis 1300 °C für Verbundwerkstoffe mit oxidischen keramischen Fasern, und bei einer Temperatur im Bereich von 1400 bis 1600 °C für Verbundwerkstoffe mit nicht-oxidkeramischen Fasern durchgeführt.

Der keramische Verbundwerkstoff weist, z.B. in Form eines Gewebes, bevorzugt einen Faservolumengehalt, bezogen auf das Gesamtvolumen des Werkstoffs, von mindestens 30 Vol.%, stärker bevorzugt von mindestens 35 Vol.%, und besonders bevorzugt von mindestens 40 Vol.% auf. Er kann, wie vorstehend beschrieben, z.B. durch die Zusammensetzung des Schlickers im erfindungsgemäßen Verfahren zur Bereitstellung des Grünkörpers, und/oder durch die Verarbeitung der Zwischenprodukte bei der Herstellung des Grünkörpers geeignet eingestellt werden.

Vorteilhafterweise kann mit Hilfe der erfindungsgemäßen Verfahren zur Herstellung eines Grünkörpers für einen keramischen Verbundwerkstoff bzw. zur Herstellung des keramischen Verbundwerkstoffs selbst die Fertigung des Verbundwerkstoffs innerhalb von z.B. weniger als 36 h, bevorzugt innerhalb von 24 h erfolgen. Dabei kann beispielsweise der Zeitbedarf für die durchzuführenden Schritte wie folgt abgeschätzt werden:
Aufbereitung des Schlickers: bis ca. 15 min
Imprägnieren der Faseranordnung mit dem Schlicker und Reduzieren des Wassergehalts des Schlickers zum Bereitstellen von Prepregs auf einer Prepreganlage: bis ca. 15 min Laminieren von Prepregs zum Bereitstellen eines geformten Verbundmaterials in Form eines Laminats: bis ca. 30 min
Konsolidieren durch Reduzierung des Wassergehalts und des Gehalts an alkoholischem organischen Lösungsmittel: bis ca. 11 h.
Sintern im Sinterofen: bis ca. 12 h.

### Beispiele

### Beispiel 1

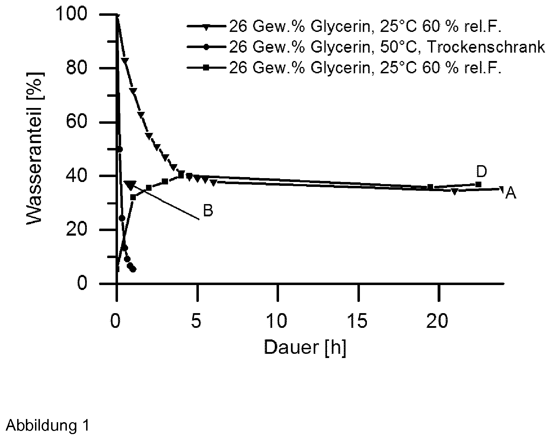

Das Verfahren wird am Beispiel der Herstellung von oxidkeramischen Prepregs gezeigt. Als Faserarchitektur werden Nextel^{™}610 Gewebe Typ DF19 (Lieferant 3M) verwendet. Vor der Verarbeitung werden diese an Luft entschlichtet (700 °C, 2 h Haltedauer). Der wässrige Schlicker hat einen Feststoffgehalt von 67 Gew.% und enthält eine Al₂O₃-ZrO₂ Pulvermischung (80 % MRS1, Albemarle; 20 % TZ-3Y-E, Krahn Chemie), 1 Gew.% Dispergator Sokalan PA 15, 26 Gew.% Glycerin bezogen auf den Feststoff. Die Gewebe werden mit Schlicker imprägniert und der überschüssige Schlicker mit einem Ziehrakel entfernt. Um das klebrige Prepreg zu erhalten, werden verschiedene Methoden angewandt. Bei der Variante A wird das infiltrierte Gewebe im Klimaschrank bei 60 % rel. Feuchte und 25 °C, 24 h lang gelagert. Bei Variante B erfolgt ein partieller Wasserentzug bei 50 °C (15 min, ca. 10 % rel. Feuchte) in einem Trockenschrank. Die Trocknungsdauer ist so gewählt, dass der Wasserentzug dem Gleichgewichtszustand von Variante A entspricht (siehe Abbildung 3). Bei Variante C (in Abbildung 2 nicht dargestellt) erfolgt zunächst ein partieller Wasserentzug bei 50 °C (15 min) und anschließend eine Lagerung im Klimaschrank bei 60 % rel. Feuchte, 25 °C (24 h). Variante D setzt sich aus einem 60 minütigen Wasserentzug bei 50 °C und einer Klimatisierung bei 60 % rel. Feuchte und 25 °C (24 h) zusammen. In diesem Fall wurde das Prepreg rückbefeuchtet, um den Gleichgewichtszustand zu erreichen. Abbildung 1 zeigt die Veränderung des Wasseranteils des Schlickers im Prepreg im Verlauf der Konditionierung oder Trocknung, bezogen auf den Wasseranteil im Schlicker nach der Infiltration und in Abhängigkeit von der Zeit.

Anschließend werden die klebrigen Prepregs auf eine Form laminiert (Labor klimatisiert auf 25 °C und 60 % rel. Feuchte). Nach der Konsolidierung (100 °C mit Gebläse, 11 h) ist der Grünkörper durch den Wasser- und Gycerinentzug stabil und nicht mehr klebrig. Die Composites werden bei 1225 °C und einer Haltedauer von 2 h gesintert. Die Biegefestigkeit beträgt bei allen Varianten ca. 300 MPa und zeigt eine gleichmäßige Prepregqualität (Tabelle 1).

**Tabelle 1 3-Punktbiegefestigkeit von Verbundwerkstoffen, deren Prepregs unterschiedlich konditioniert wurden**

| Gesinterte Composites (4 Lagen DF19, 11×11 cm²) | Faservolumengehalt [Vol.%] | Biegefestigkeit [MPa] | Methode der hydrothermalen Konditionierung |
|---|---|---|---|
| Klimaschrank 60 % rel. F. 25 °C (24 h) | 44 | 334 ± 25 | Variante A |
| Partieller Wasserentzug bei 50 °C (15 min) | 47 | 320 ± 9 | Variante B |
| Partieller Wasserentzug bei 50 °C (15 min) Klimaschrank 60 % rel. F. 25 °C (24 h) | 45 | 299 ± 34 | Variante C |
| Wasserentzug bei 50 °C (60 min) und Rückbefeuchtung Klimaschrank 60 % rel. F. 25 °C (24 h) | 46 | 294 ± 18 | Variante D |

### Beispiel 2

Das Verfahren wird am Beispiel der Herstellung von oxidkeramischen Prepregs gezeigt. Als Faserarchitektur werden Nextel^{™}610 Gewebe Typ DF19 (Lieferant 3M) verwendet. Vor der Verarbeitung werden diese an Luft entschlichtet (700 °C, 2 h Haltedauer). Der wässrige Schlicker hat einen Feststoffgehalt von 67 Gew.% und enthält eine Al₂O₃-ZrO₂ Pulvermischung (80 % MRS1, Albemarle; 20 % TZ-3Y-E, Krahn Chemie), 1 Gew.% Dispergator Sokalan PA 15, 26 Gew.% Ethan-1,2-diol bezogen auf den Feststoff. Die Gewebe werden mit Schlicker imprägniert und der überschüssige Schlicker mit einem Ziehrakel entfernt.

Um das klebrige Prepreg zu erhalten, wird das infiltrierte Gewebe im Klimaschrank bei 60 % rel. Feuchte und 25 °C, 20 h lang gelagert.

Anschließend werden die klebrigen Prepregs auf eine Form laminiert (Labor klimatisiert auf 25 °C und 60 % rel. Feuchte). Nach der Konsolidierung (100 °C mit Gebläse, 11 h) ist der Grünkörper durch den Wasser- und Ethan-1,2-diol-Entzug stabil und nicht mehr klebrig. Das Composite wird bei 1225 °C und einer Haltedauer von 2 h gesintert.

## Patentansprüche

1. Verfahren zur Herstellung eines Grünkörpers für einen keramischen Verbundwerkstoff, das die folgenden Schritte beinhaltet:
a) Imprägnieren einer Anordnung keramischer Fasern mit einem Schlicker, der die folgenden Bestandteile umfasst:
(i) 10 bis 40 Vol.%, bezogen auf das Gesamtvolumen des Schlickers, keramische Partikel,
(ii) ein alkoholisches organisches Lösungsmittel, ausgewählt aus:
(ii-1) 21 bis 35 Gew.%, bezogen auf das Gesamtgewicht der keramischen Partikel im Schlicker, Glycerin,
(ii-2) 21 bis 35 Gew.%, bezogen auf das Gesamtgewicht der keramischen Partikel im Schlicker, eines Oligo- oder Polyethylenglycols mit einem mittleren Molekulargewicht von maximal 800 g/mol,
(ii-3) 21 bis 35 Gew.%, bezogen auf das Gesamtgewicht der keramischen Partikel im Schlicker, mindestens eines C2-C6-Alkandiols, und
(ii-4) 21 bis 35 Gew.%, bezogen auf das Gesamtgewicht der keramischen Partikel im Schlicker, eines Gemischs aus zwei oder mehr Komponenten, ausgewählt aus einem C2-C6-Alkandiol, einem Oligo- oder Polyethylenglycol mit einem mittleren Molekulargewicht von maximal 800 g/mol, und Glycerin; und
(iii) Wasser;
b) Reduzieren des Wassergehalts des Schlickers in der imprägnierten Faseranordnung, um ein Prepreg für einen keramischen Verbundwerkstoff zu erhalten;
c) Bereitstellen eines geformten Verbundmaterials aus einem oder mehreren der gemäß Schritt b) erhaltenen Prepregs;
d) Konsolidieren des geformten Verbundmaterials durch Reduzieren des Wassergehalts und des Gehalts an alkoholischem organischen Lösungsmittel, so dass ein Grünkörper erhalten wird.

2. Verfahren nach Anspruch 1, wobei das alkoholische organische Lösungsmittel Glycerin ist.

3. Verfahren nach einem der Ansprüche 1 oder 2, wobei der in Schritt a) eingesetzte Schlicker mindestens 24 Gew.% des alkoholischen organischen Lösungsmittels, bezogen auf das Gesamtgewicht der keramischen Partikel im Schlicker, enthält.

4. Verfahren nach einem der Ansprüche 1 bis 3, wobei der in Schritt a) eingesetzte Schlicker mindestens 20 Vol.% keramische Partikel enthält.

5. Verfahren nach einem der Ansprüche 1 bis 4, wobei der Wassergehalt des Schlickers in dem in Schritt b) bereit gestellten Prepreg so eingestellt wird, dass der Volumenanteil der keramischen Partikel im Schlicker, bezogen auf das Gesamtvolumen des Schlickers im Prepreg, mindestens 45 Vol.% beträgt.

6. Verfahren nach einem der Ansprüche 1 bis 5, wobei der Wasseranteil des Schlickers in dem in Schritt b) bereit gestellten Prepreg 4 bis 13 Gew.%, bezogen auf das Gesamtgewicht des Schlickers im Prepreg, beträgt.

7. Verfahren nach einem der Ansprüche 1 bis 6, wobei der Volumenanteil der keramischen Fasern im Prepreg 15 bis 60 Vol.%, bezogen auf das Gesamtvolumen des Prepregs, beträgt.

8. Verfahren nach einem der Ansprüche 1 bis 7, wobei der Schritt b) des Reduzierens des Wassergehalts ein Halten der imprägnierten Faseranordnung bei Bedingungen einer Temperatur von 50 bis 150 °C und 10 bis 30 % rel. Feuchte über einen Zeitraum von 1 min bis 2 h beinhaltet.

9. Verfahren nach einem der Ansprüche 1 bis 8, wobei der Schritt b) des Reduzierens des Wassergehalts eine hydrothermale Konditionierung der imprägnierten Faseranordnung beinhaltet.

10. Verfahren nach einem der Ansprüche 1 bis 9, wobei das Verfahren nach Schritt b) eine Rückbefeuchtung des/der Prepregs durch hydrothermale Konditionierung beinhaltet.

11. Verfahren zur Herstellung eines keramischen Verbundwerkstoffs, das die Schritte der Herstellung eines Grünkörpers gemäß dem Verfahren nach einem der Ansprüche 1 bis 10, und des Sinterns des Grünkörpers umfasst.

12. Ein Prepreg für einen keramischen Verbundwerkstoff, das eine Anordnung keramischer Fasern umfasst, die mit einem Schlicker imprägniert ist,
wobei der Schlicker (i) keramische Partikel, (ii) ein alkoholisches organisches Lösungsmittel und (iii) Wasser umfasst, und
wobei das alkoholische organische Lösungsmittel ausgewählt ist aus:
(ii-1) 21 bis 35 Gew.%, bezogen auf das Gesamtgewicht der keramischen Partikel im Schlicker, Glycerin,
(ii-2) 21 bis 35 Gew.%, bezogen auf das Gesamtgewicht der keramischen Partikel im Schlicker, eines Oligo- oder Polyethylenglycols mit einem mittleren Molekulargewicht von maximal 800 g/mol,
(ii-3) 21 bis 35 Gew.%, bezogen auf das Gesamtgewicht der keramischen Partikel im Schlicker, mindestens eines C2-C6-Alkandiols, und
(ii-4) 21 bis 35 Gew.%, bezogen auf das Gesamtgewicht der keramischen Partikel im Schlicker, eines Gemischs aus zwei oder mehr Komponenten, ausgewählt aus einem C2-C6-Alkandiol, einem Oligo- oder Polyethylenglycol mit einem mittleren Molekulargewicht von maximal 800 g/mol, und Glycerin.

13. Prepreg nach Anspruch 12, wobei das alkoholische organische Lösungsmittel Glycerin ist.

14. Prepreg nach einem der Ansprüche 12 oder 13, wobei der Schlicker mindestens 24 Gew.% des alkoholischen organischen Lösungsmittels, bezogen auf das Gesamtgewicht der keramischen Partikel im Schlicker, enthält.

15. Prepreg nach einem der Ansprüche 12 bis 14, wobei der Volumenanteil der keramischen Partikel im Schlicker, bezogen auf das Gesamtvolumen des Schlickers im Prepreg, mindestens 45 Vol.% beträgt.

16. Prepreg nach einem der Ansprüche 12 bis 15, wobei der Wasseranteil des Schlickers 4 bis 13 Gew.% bezogen auf das Gesamtgewicht des Schlickers im Prepreg, beträgt.

17. Geformtes Verbundmaterial, umfassend mehrere Prepregs gemäß einem der Ansprüche 12 bis 16, wobei es sich bei dem Verbundmaterial um ein Laminat aus zwei oder mehr der Prepregs gemäß einem der Ansprüche 12 bis 16 handelt.

## Claims

1. A process for the preparation of a green body for a ceramic matrix composite comprising the following steps:
a) impregnating an arrangement of ceramic fibers with a slurry, which slurry comprises the following components:
(i) 10 to 40 vol.-%, based on the total volume of the slurry, of ceramic particles,
(ii) an alcoholic organic solvent selected from:
(ii-1) 21 to 35 wt.-%, based on the total weight of the ceramic particles in the slurry, of glycerol,
(ii-2) 21 to 35 wt.-%, based on the total weight of the ceramic particles in the slurry, of an oligo or polyethylene glycol with an average molecular weight of at most 800 g/mol,
(ii-3) 21 to 35 wt.-%, based on the total weight of the ceramic particles in the slurry, of at least one C2-C6 alkane diol, and
(ii-4) 21 to 35 wt.-%, based on the total weight of the ceramic particles in the slurry, of a mixture of two or more components, selected from a C2-C6 alkane diol, an oligo or polyethylene glycol with an average molecular weight of at most 800 g/mol, and glycerol; and
(iii) water;
b) reducing the water content in the slurry in the impregnated fiber arrangement to obtain a prepreg for a ceramic matrix composite;
c) providing a shaped composite material from one or more prepregs obtained according to step b);
d) consolidating the shaped composite material by reducing the water content and the content of alcoholic organic solvent so that a green body is obtained.

2. The process of claim 1, wherein the alcoholic organic solvent is glycerol.

3. The process of any of claims 1 or 2, wherein the slurry used in step a) contains at least 24 wt.-% of the alcoholic organic solvent, based on the total weight of the ceramic particles in the slurry.

4. The process of any of claims 1 to 3, wherein the slurry used in step a) contains at least 20 vol.-% of ceramic particles.

5. The process of any of claims 1 to 4, wherein the water content of the slurry in the prepreg provided in step b) is adjusted such that the volume fraction of the ceramic particles in the slurry, based on the total volume of the slurry in the prepreg, is at least 45 vol.-%.

6. The process of any of claims 1 to 5, wherein the water fraction of the slurry in the prepreg provided in step b) is 4 to 13 wt.-%, based on the total weight of the slurry in the prepreg.

7. The process of any of claims 1 to 6, wherein the volume fraction of the ceramic fibers in the prepreg is 15 to 60 vol.-%, based on the total volume of the prepreg.

8. The process of any of claims 1 to 7, wherein step b) of reducing the water content includes keeping the impregnated fiber arrangement at conditions of a temperature of 50 to 150°C and a relative humidity of 10 to 30% for a period of time of 1 min to 2 h.

9. The process of any of claims 1 to 8, wherein step b) of reducing the water content includes hydrothermal conditioning of the impregnated fiber arrangement.

10. The process of any of claims 1 to 9, wherein after step b), the process includes a rehumidification of the prepreg(s) by means of hydrothermal conditioning.

11. A process for the preparation of a ceramic matrix composite comprising the steps for the preparation of a green body according to the process of any of claims 1 to 10, and sintering the green body.

12. A prepreg for a ceramic matrix composite comprising an arrangement of ceramic fibers impregnated with a slurry
wherein the slurry comprises (i) ceramic particles, (ii) an alcoholic organic solvent and (iii) water, and
wherein the alcoholic organic solvent is selected from:
(ii-1) 21 to 35 wt.-%, based on the total weight of the ceramic particles in the slurry, of glycerol,
(ii-2) 21 to 35 wt.-%, based on the total weight of the ceramic particles in the slurry, of an oligo or polyethylene glycol with an average molecular weight of at most 800 g/mol,
(ii-3) 21 to 35 wt.-%, based on the total weight of the ceramic particles in the slurry, of at least one C2-C6 alkane diol, and
(ii-4) 21 to 35 wt.-%, based on the total weight of the ceramic particles in the slurry, of a mixture of two or more components, selected from a C2-C6 alkane diol, an oligo or polyethylene glycol with an average molecular weight of at most 800 g/mol, and glycerol.

13. The prepreg of claim 12, wherein the alcoholic organic solvent is glycerol.

14. The prepreg of any of claims 12 or 13, wherein the slurry contains at least 24 wt.-% of the alcoholic organic solvent, based on the total weight of the ceramic particles in the slurry.

15. The prepreg of any of claims 12 to 14, wherein the volume fraction of the ceramic particles in the slurry is at least 45 vol.-%, based on the total volume of the slurry in the prepreg.

16. The prepreg of any of claims 12 to 15, wherein the water fraction of the slurry is 4 to 13 wt.-%, based on the total weight of the slurry in the prepreg.

17. A shaped composite material comprising a plurality of prepregs according to any of claims 12 to 16, wherein the composite material is a laminate of two or more of the prepregs according to any of claims 12 to 16.

## Revendications

1. Procédé pour la production d'un corps cru pour un matériau composite céramique, qui comprend les étapes suivantes:
a) imprégnation d'un agencement de fibres céramiques avec une barbotine qui comprend les composants suivants:
(i) 10 à 40 % en volume, par rapport au volume total de la barbotine, de particules céramiques,
(ii) un solvant organique alcoolique choisi parmi:
(ii-1) 21 à 35 % en poids, par rapport au poids total des particules céramiques dans la barbotine, de glycérine,
(ii-2) 21 à 35 % en poids, par rapport au poids total des particules céramiques dans la barbotine, d'un oligo- ou polyéthylèneglycol ayant un poids moléculaire moyen d'au plus 800 g/mol,
(ii-3) 21 à 35 % en poids, par rapport au poids total des particules céramiques dans la barbotine, d'au moins un alcanediol en C2-C6, et
(ii-4) 21 à 35 % en poids, par rapport au poids total des particules céramiques dans la barbotine, d'un mélange de deux composants ou plus choisis parmi un alcanediol en C2-C6, un oligo- ou polyéthylèneglycol ayant un poids moléculaire moyen d'au plus 800 g/mol et la glycérine; et
(iii) de l'eau;
b) réduction de la teneur en eau de la barbotine dans l'agencement de fibres imprégné pour obtenir un préimprégné pour un matériau composite céramique;
c) préparation d'un matériau composite mis en forme à partir d'un ou plusieurs des préimprégnés obtenus selon l'étape b);
d) consolidation du matériau composite mis en forme par réduction de la teneur en eau et de la teneur en solvant organique alcoolique, de sorte qu'un corps cru est obtenu.

2. Procédé selon la revendication 1, dans lequel le solvant organique alcoolique est la glycérine.

3. Procédé selon l'une des revendications 1 ou 2, dans lequel la barbotine utilisée dans l'étape a) contient au moins 24 % en poids du solvant organique alcoolique, par rapport au poids total des particules céramiques dans la barbotine.

4. Procédé selon l'une des revendications 1 à 3, dans lequel la barbotine utilisée dans l'étape a) contient au moins 20 % en volume de particules céramiques.

5. Procédé selon l'une des revendications 1 à 4, dans lequel la teneur en eau de la barbotine dans le préimprégné préparé dans l'étape b) est ajustée de telle sorte que la fraction volumique des particules céramiques dans la barbotine, par rapport au volume total de la barbotine dans le préimprégné, est d'au moins 45 % en volume.

6. Procédé selon l'une des revendications 1 à 5, dans lequel la fraction aqueuse de la barbotine dans le préimprégné préparé dans l'étape b) est 4 à 13 % en poids, par rapport au poids total de la barbotine dans le préimprégné.

7. Procédé selon l'une des revendications 1 à 6, dans lequel la fraction volumique des fibres céramiques dans le préimprégné est 15 à 60 % en volume, par rapport au volume total du préimprégné.

8. Procédé selon l'une des revendications 1 à 7, dans lequel l'étape b) de réduction de la teneur en eau comprend un maintien de l'agencement de fibres imprégné dans des conditions d'une température de 50 à 150°C et de 10 à 30 % d'humidité relative sur une période de 1 min à 2 h.

9. Procédé selon l'une des revendications 1 à 8, dans lequel l'étape b) de réduction de la teneur en eau comprend un conditionnement hydrothermal de l'agencement de fibres imprégné.

10. Procédé selon l'une des revendications 1 à 9, dans lequel le procédé après l'étape b) comprend une réhumidification du/des préimprégné(s) par conditionnement hydrothermal.

11. Procédé pour la production d'un matériau composite céramique, qui comprend les étapes de production d'un corps cru selon le procédé selon l'une des revendications 1 à 10, et de frittage du corps cru.

12. Préimprégné pour un matériau composite céramique, qui comprend un agencement de fibres céramiques qui est imprégné avec une barbotine,
dans lequel la barbotine comprend (i) des particules céramiques, (ii) un solvant organique alcoolique et (iii) de l'eau, et
dans lequel le solvant organique alcoolique est choisi parmi:
(ii-1) 21 à 35 % en poids, par rapport au poids total des particules céramiques dans la barbotine, de glycérine,
(ii-2) 21 à 35 % en poids, par rapport au poids total des particules céramiques dans la barbotine, d'un oligo- ou polyéthylèneglycol ayant un poids moléculaire moyen d'au plus 800 g/mol,
(ii-3) 21 à 35 % en poids, par rapport au poids total des particules céramiques dans la barbotine, d'au moins un alcanediol en C2-C6, et
(ii-4) 21 à 35 % en poids, par rapport au poids total des particules céramiques dans la barbotine, d'un mélange de deux composants ou plus choisis parmi un alcanediol en C2-C6, un oligo- ou polyéthylèneglycol ayant un poids moléculaire moyen d'au plus 800 g/mol, et la glycérine.

13. Préimprégné selon la revendication 12, dans lequel le solvant organique alcoolique est la glycérine.

14. Préimprégné selon l'une des revendications 12 ou 13, dans lequel la barbotine contient au moins 24 % en poids du solvant organique alcoolique, par rapport au poids total des particules céramiques dans la barbotine.

15. Préimprégné selon l'une des revendications 12 à 14, dans lequel la fraction volumique des particules céramiques dans la barbotine, par rapport au volume total de la barbotine dans le préimprégné, est d'au moins 45 % en volume.

16. Préimprégné selon l'une des revendications 12 à 15, dans lequel la fraction aqueuse de la barbotine est 4 à 13 % en poids par rapport au poids total de la barbotine dans le préimprégné.

17. Matériau composite mis en forme comprenant plusieurs préimprégnés selon l'une des revendications 12 à 16, dans lequel il s'agit concernant le matériau composite d'un stratifié de deux ou plusieurs des préimprégnés selon l'une des revendications 12 à 16.
